# EUROPEAN PATENT SPECIFICATION

(11) **EP 3 859 248 B1**
(45) Date of publication and mention of the grant of the patent: **20.03.2024**
(21) Application number: 19865366.9
(22) Date of filing: 24.09.2019
(51) Int. Cl.: F24F 3/06, F24F 11/36, F25B 49/02, F24F 5/00, F24F 110/66, F25B 13/00

(54) **HEAT EXCHANGE UNIT**
WÄRMETAUSCHEREINHEIT
UNITÉ D'ÉCHANGE DE CHALEUR

(30) Priority: 28.09.2018 JP 2018184829
(43) Date of publication of application: 04.08.2021
(73) Proprietor: DAIKIN INDUSTRIES, LTD., Osaka-Shi, Osaka 530-0001 (JP)
(72) Inventor: KOBAYASHI, Toshiyuki, Osaka 530-8323 (JP); MOMONO, Toshiyuki, Osaka 530-8323 (JP)
(74) Representative: Hoffmann Eitle
(86) International application number: PCT/JP2019/037318
(87) International publication number: WO 2020/067038

(56) References cited:
- EP-A1- 3 199 883
- WO-A1-2013/038703
- WO-A1-2013/145014
- WO-A1-2013/145014
- WO-A1-2017/119137
- WO-A1-2017/119137
- JP-A- 2013 064 538
- JP-A- 2013 064 538
- JP-A- 2016 191 504
- JP-A- 2016 191 504
- JP-A- 2016 191 505

## Description

### TECHNICAL FIELD

The present invention relates to a heat exchange unit that exchanges heat between a refrigerant and a liquid medium sent to utilization-side equipment, to cool or heat the liquid medium.

### BACKGROUND ART

Conventionally, there is known a heat exchange unit that exchanges heat between a refrigerant and a liquid medium sent to utilization-side equipment, to cool or heat the liquid medium. For example, WO 2014/97440 A discloses a heat exchange unit that cools brine or the like with a refrigerant in a heat exchanger arranged in a relay device, and sends the cooled brine or the like to utilization-side equipment.

A further example of a previously known heat exchange unit is derivable from JP 2016 191504 A, which forms basis for the two-part form of independent claim 1.

### SUMMARY OF THE INVENTION

### <Technical Problem>

Meanwhile, in this heat exchange unit, a flammable (including lower flammability) refrigerant may be used in consideration of various characteristics of the refrigerant. However, when a flammable refrigerant is used in the heat exchange unit, if the refrigerant leaks for some reason, there is a possibility of ignition with, as an ignition source, electric equipment in a casing that accommodates the heat exchanger.

Therefore, for heat exchange units that use flammable refrigerants, measures are required for reducing the possibility of ignition with, as the ignition source, the electric equipment in the casing of the heat exchange unit even if the refrigerant leaks.

### <Solution to Problem>

The object above is solved by means of a heat exchange unit according to independent claim 1. Distinct embodiments are derivable from the dependent claims.
A heat exchange unit of a first aspect exchanges heat between a liquid medium sent to utilization-side equipment and a refrigerant that is flammable, to perform at least one of cooling and heating of the liquid medium. The heat exchange unit includes a heat exchanger, an electric component that can be an ignition source, a casing, and a gas detection sensor. The heat exchanger exchanges heat between the refrigerant and the liquid medium. The casing accommodates the heat exchanger and the electric component that can be an ignition source. The gas detection sensor has a detection element arranged below the electric component, and detects the presence or absence of refrigerant gas at a place where the detection element is arranged. Specifically, the detection element of the gas detection sensor is arranged below a liquid-side connecting port and a gas-side connecting port of the heat exchange unit.

The refrigerant gas is usually heavier than air. Therefore, when the refrigerant leaks, the leaked refrigerant gas tends to stagnate on a lower side. In this heat exchange unit, since the detection element of the gas detection sensor is arranged below the electric component that can be an ignition source, it is easy to detect refrigerant leakage before ignition with the electric equipment inside the casing, even if the refrigerant leaks.

A heat exchange unit of a second aspect is the heat exchange unit of the first aspect, in which the detection element is arranged at a position lower than a height position of 300 mm above a bottom of the casing.

Here, since the detection element of the gas detection sensor is arranged at the position lower than the height position of 300 mm above the bottom of the casing where the refrigerant gas heavier than air tends to accumulate, it is easy to detect refrigerant leakage relatively early even if the refrigerant leaks, and a possibility of ignition can be reduced.

A heat exchange unit of a third aspect is the heat exchange unit of the first aspect, in which the casing is installed in a unit installation space. The detection element is arranged at a height position within 300 mm from a floor surface on which the heat exchange unit is installed in the unit installation space.

An arrangement of the detection element of the gas detection sensor at such a position makes it easy to detect refrigerant leakage early even if the refrigerant leaks, and can reduce a possibility of ignition.

A heat exchange unit of a fourth aspect is any of the heat exchange units of the first aspect to the third aspect, further including a pump. The pump includes a motor and a terminal box connected with an electric wire for supply of electric power to the motor. The pump is arranged inside the casing. The pump sends the liquid medium to the utilization-side equipment. The electric component that can be an ignition source includes the terminal box.

A heat exchange unit of a fifth aspect is any of the heat exchange units of the first aspect to the fourth aspect, in which the electric component that can be an ignition source includes at least one of an electromagnetic switch, a contactor, and a relay.

### BRIEF DESCRIPTION OF THE DRAWINGS

FIG. 1 is a perspective view of a heat exchange unit according to a first embodiment of the invention.
FIG. 2 is a schematic configuration diagram of a heat load processing system including the heat exchange unit of FIG. 1.
FIG. 3 is a schematic plan view of a machine room that is an installation place of the heat exchange unit of FIG. 1.
FIG. 4 is a schematic front view of the heat exchange unit of FIG. 1.
FIG. 5 is a schematic plan view of a lower part inside a casing of the heat exchange unit of FIG. 1.
FIG. 6 is a schematic front view of the heat exchange unit of FIG. 1 with a side plate of the casing removed.
FIG. 7 is a schematic right side view of the heat exchange unit of FIG. 1 with a side plate of the casing removed.
FIG. 8 is a schematic plan view of a drain pan of the heat exchange unit of FIG. 1.
FIG. 9 is a schematic rear view of a part of the casing of the heat exchange unit of FIG. 1 and the drain pan of FIG. 8.
FIG. 10 is a schematic right side view of the drain pan of FIG. 8.
FIG. 11A is view obtained by schematically drawing an example of a float installed in an internal space of the drain pan of FIG. 8.
FIG. 11B is view obtained by schematically drawing another example of the float installed in the internal space of the drain pan of FIG. 8.
FIG. 12 is a schematic front view of a heat exchange unit of Modified example 1B.
FIG. 13 is a perspective view of a heat exchange unit according to a second embodiment of the invention.
FIG. 14 is a schematic configuration diagram of a heat load processing system including the heat exchange unit of FIG. 13.
FIG. 15 is a schematic plan view of a lower part inside a casing of the heat exchange unit of FIG. 13.
FIG. 16 is a schematic front view of the heat exchange unit of FIG. 13 with a side plate of the casing removed.
FIG. 17 is a schematic right side view of the heat exchange unit of FIG. 13 with a side plate of the casing removed.
FIG. 18 is a schematic rear view of a part of the casing of the heat exchange unit of FIG. 12 and a drain pan of the heat exchange unit of FIG. 12.
FIG. 19 is a specific example of a refrigerant used in the heat exchange units of the first embodiment and the second embodiment.

### DESCRIPTION OF EMBODIMENTS

Hereinafter, an embodiment of a heat exchange unit will be described.

### <First Embodiment>

### (1) Overall configuration

A heat exchange unit 100 according to a first embodiment and a heat load processing system 1 including the heat exchange unit 100 will be described with reference to the drawings.

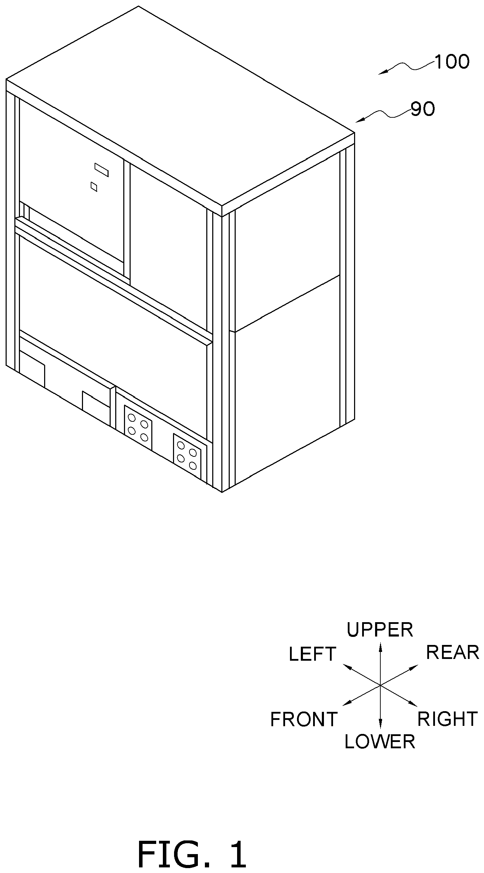

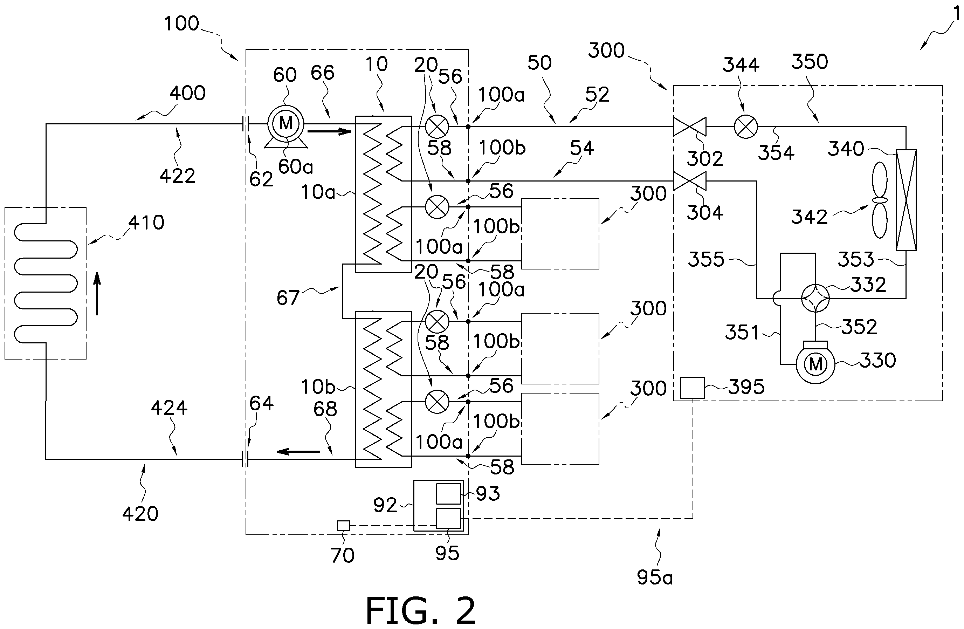

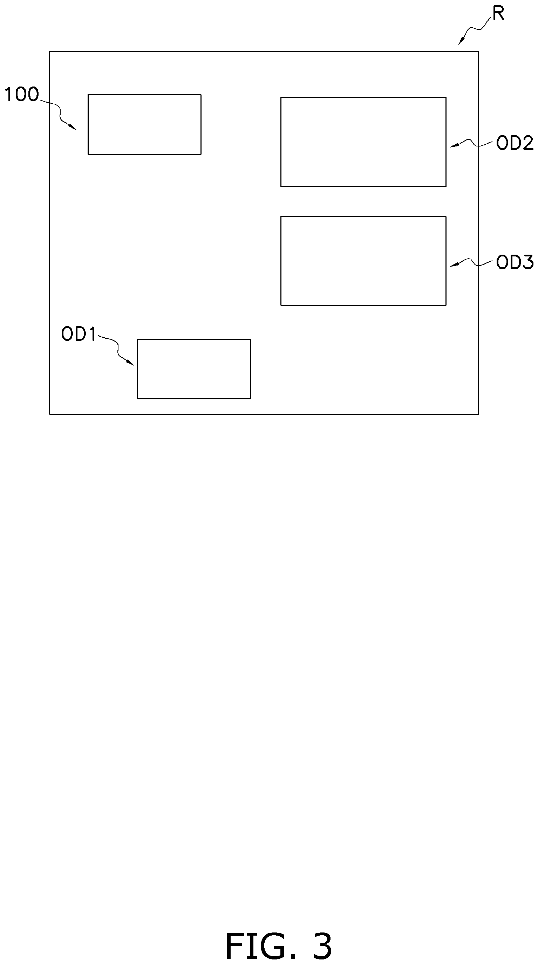

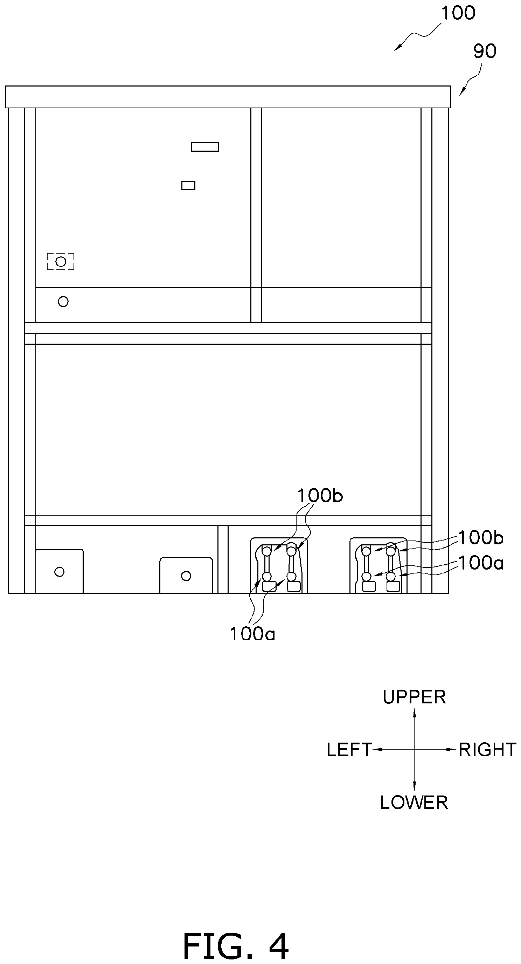

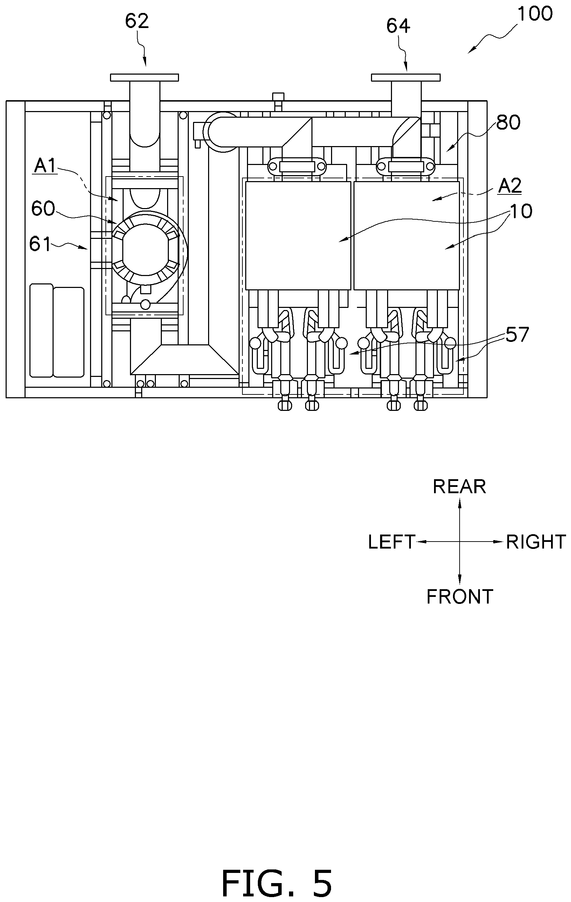

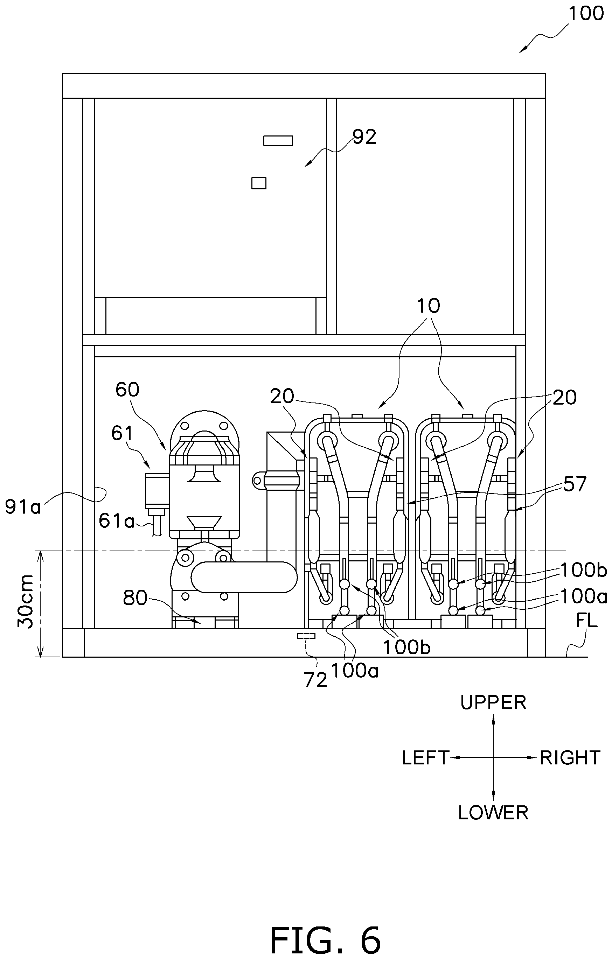

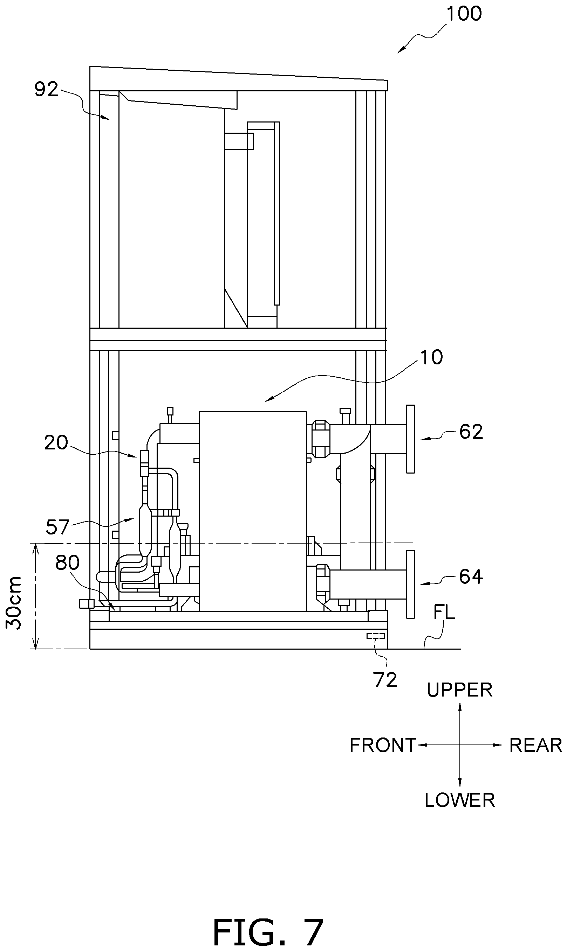

FIG. 1 is a perspective view of the heat exchange unit 100. FIG. 2 is a schematic configuration diagram of the heat load processing system 1 including the heat exchange unit 100. Note that, in FIG. 2, an internal configuration is drawn only for one of four heat source units 300, and drawing of an internal configuration of the other three is omitted. FIG. 3 is a schematic plan view of a machine room R where the heat exchange unit 100 is installed. FIG. 4 is a schematic front view of the heat exchange unit 100. FIG. 5 is a schematic plan view of a lower part inside a casing 90 of the heat exchange unit 100. FIG. 6 is a schematic front view of the heat exchange unit 100 with a side plate of the casing 90 removed. FIG. 7 is a schematic right side view of the heat exchange unit 100 with a side plate of the casing 90 removed.

Note that, in the following description, expressions indicating directions such as "upper", "lower", "left", "right", "front (front face)", and "rear (back face)" may be used. Unless otherwise specified, these directions are indicated by arrows in figures.

The heat load processing system 1 mainly includes the heat exchange unit 100, the heat source unit 300, and utilization-side equipment 410.

The heat exchange unit 100 is a unit that exchanges heat between a liquid medium and a refrigerant, to perform at least one of cooling and heating of the liquid medium. In particular, the heat exchange unit 100 of the present embodiment performs both cooling and heating of the liquid medium by exchanging heat between the liquid medium and the refrigerant. The liquid medium cooled or heated by a refrigerant in the heat exchange unit 100 is sent to the utilization-side equipment 410.

Note that the liquid medium used in the present embodiment is, for example, a heat medium such as water or brine. The liquid medium used as brine is, for example, an aqueous solution of sodium chloride, an aqueous solution of calcium chloride, an aqueous solution of ethylene glycol, an aqueous solution of propylene glycol, or the like. However, the liquid medium is not limited to the types exemplified here, and may be appropriately selected. In the present embodiment, brine is used as the liquid medium.

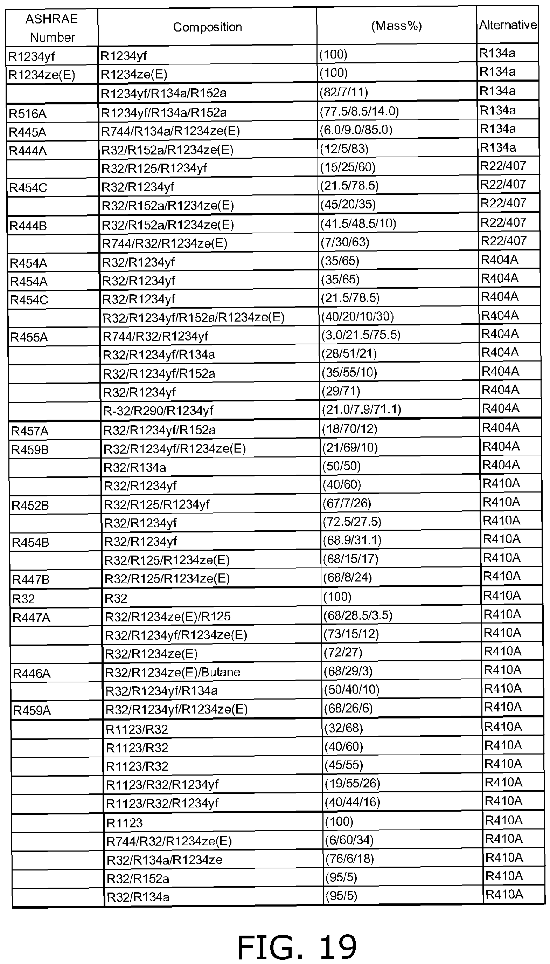

In the present embodiment, the refrigerant is a flammable refrigerant. Note that, here, flammable refrigerants includes refrigerants that fall into Class 3 (higher flammability), Class 2 (flammable), and Subclass 2L (lower flammability) in the standard of ASHRAE 34 Designation and safety classification of refrigerant of the United States of America, or the standard of ISO 817 Refrigerants - Designation and safety classification. For example, FIG. 19 shows a specific example of the refrigerant used in the present embodiment. "ASHRAE Number" in FIG. 19 indicates an ASHRAE number of a refrigerant defined by ISO 817, "Composition" indicates an ASHRAE number of a substance contained in the refrigerant, "Mass%" indicates a mass percent concentration of each substance contained in the refrigerant, and "Alternative" indicates a name of a substance of the refrigerant that is often replaced by the refrigerant. In the present embodiment, the refrigerant to be used is R32. The refrigerants illustrated in FIG. 19 have a feature of having a higher density than air.

An installation place is not limited, but the heat exchange unit 100 is installed indoors, for example. In the present embodiment, the heat exchange unit 100 is installed in the machine room R together with other devices (devices OD1 to OD3 in FIG. 3) as shown in FIG. 3. The devices OD1 to OD3 include, but are not limited to, a boiler, a generator, a switchboard, and the like. However, only the heat exchange unit 100 may be installed in the machine room R. Further, the heat exchange unit 100 may be installed outdoors such as on a rooftop of a building or around a building.

The heat source unit 300 is a device that uses air as a heat source to cool or heat the refrigerant. The heat source unit 300 is connected to the heat exchange unit 100 via a liquid-refrigerant connection pipe 52 and a gas-refrigerant connection pipe 54, and form a refrigerant circuit 50 together with the heat exchange unit 100. The refrigerant circuit 50 mainly has a compressor 330, a flow path switching mechanism 332, a heat-source-side heat exchanger 340, and a second expansion mechanism 344 of the heat source unit 300, which will be described later, a utilization-side heat exchanger 10 and a first expansion mechanism 20 of the heat exchange unit 100, which will be described later, and the like. An installation place is not limited, but the heat source unit 300 is installed, for example, on a rooftop or around of a building, or the like.

In the present embodiment, the heat load processing system 1 has the four heat source units 300 (see FIG. 2). Then, the heat exchange unit 100 cools or heats the liquid medium with the refrigerant cooled or heated in the four heat source units 300. However, the number of heat source units 300 is an example, and the number is not limited to four. The number of heat source units 300 may be, for example, one to three, or five or more.

The utilization-side equipment 410 is equipment that uses or stores the liquid medium cooled or heated by the heat exchange unit 100. The utilization-side equipment 410 is connected to the heat exchange unit 100 via a liquid medium connection pipe 420 to form a liquid medium circuit 400. In the liquid medium circuit 400, the liquid medium sent by a pump 60 of the heat exchange unit 100, which will be described later, circulates.

The utilization-side equipment 410 is, for example, an air handling unit or a fan coil unit that performs air conditioning by exchanging heat between air and the liquid medium cooled or heated by the heat exchange unit 100. However, the utilization-side equipment 410 may be, for example, manufacturing equipment that cools or heats a manufacturing device or a manufactured product by using the liquid medium cooled or heated by the heat exchange unit 100. Further, the utilization-side equipment 410 may be, for example, a tank that stores the liquid medium cooled or heated by the heat exchange unit 100. The liquid medium stored in the tank as the utilization-side equipment 410 is, for example, sent to a device using the liquid medium by a pump or the like (not illustrated).

FIG. 2 illustrates only one piece of the utilization-side equipment 410. However, the heat load processing system 1 includes multiple pieces of utilization-side equipment, and the liquid medium cooled or heated by the heat exchange unit 100 may be sent to the multiple pieces of utilization-side equipment. When the heat load processing system 1 includes multiple pieces of utilization-side equipment, types of the multiple pieces of utilization-side equipment may all be the same, or the multiple pieces of utilization-side equipment may include a plurality of types of equipment.

### (2) Detailed configuration

The heat source unit 300, the liquid-refrigerant connection pipe 52 and the gas-refrigerant connection pipe 54, the liquid medium circuit 400, and the heat exchange unit 100 will be described in detail.

### (2-1) Heat source unit

The heat source unit 300 will be described with reference to FIG. 2. Note that, in FIG. 2, an internal configuration is drawn only for one of the four heat source units 300, and drawing of an internal configuration of the other three is omitted. The heat source units 300 omitted from the drawing also have a configuration similar to the heat source unit 300 described below.

The heat source unit 300 mainly includes an in-unit refrigerant pipe 350, the compressor 330, the flow path switching mechanism 332, the heat-source-side heat exchanger 340, the second expansion mechanism 344, a fan 342, a gas-side shutoff valve 304, a liquid-side shutoff valve 302, and a heat-source-side control board 395 (see FIG. 2).

### (2-1-1) In-unit pipe

The in-unit refrigerant pipe 350 is a pipe connecting between configurations of the heat source unit 300, including the compressor 330, the flow path switching mechanism 332, the heat-source-side heat exchanger 340, the second expansion mechanism 344, the gas-side shutoff valve 304, and the liquid-side shutoff valve 302. The in-unit refrigerant pipe 350 includes a suction pipe 351, a discharge pipe 352, a first gas-side pipe 353, a liquid-side pipe 354, and a second gas-side pipe 355 (see FIG. 2).

The suction pipe 351 is a pipe that connects a suction port (not illustrated) of the compressor 330 and the flow path switching mechanism 332. The suction pipe 351 is provided with an accumulator (not illustrated). The discharge pipe 352 is a pipe that connects a discharge port (not illustrated) of the compressor 330 and the flow path switching mechanism 332. The first gas-side pipe 353 is a pipe that connects the flow path switching mechanism 332 and a gas side of the heat-source-side heat exchanger 340. The liquid-side pipe 354 is a pipe that connects a liquid side of the heat-source-side heat exchanger 340 and the liquid-side shutoff valve 302. In the liquid-side pipe 354, the second expansion mechanism 344 is arranged. The second gas-side pipe 355 is a pipe that connects the flow path switching mechanism 332 and the gas-side shutoff valve 304.

### (2-1-2) Compressor

The compressor 330 suctions a low-pressure refrigerant in a refrigeration cycle through the suction pipe 351, compresses the refrigerant by a compression mechanism (not illustrated), and discharges a high-pressure refrigerant in the refrigeration cycle after compression through the discharge pipe 352.

The compressor 330 is, for example, a scroll-type compressor. However, a type of the compressor 330 is not limited to the scroll type, and the compressor may be, for example, a screw type, a rotary type, or the like. The compressor 330 is, for example, a compressor having a variable capacity, but may be, for example, a compressor having a constant capacity.

### (2-1-3) Flow path switching mechanism

The flow path switching mechanism 332 is a mechanism to switch a flow direction of the refrigerant in the refrigerant circuit 50 in accordance with an operating mode of the heat load processing system 1. The operating modes of the heat load processing system 1 include a mode for cooling the liquid medium (hereinafter referred to as a cooling mode) and a mode for heating the liquid medium (hereinafter referred to as a heating mode).

In the present embodiment, the flow path switching mechanism 332 is a four-way switching valve. However, the flow path switching mechanism 332 is not limited to the four-way switching valve, and may be configured to be able to realize switching of a flow direction of the refrigerant as follows, by combining a plurality of electromagnetic valves and pipes.

In the cooling mode, the flow path switching mechanism 332 switches the flow direction of the refrigerant in the refrigerant circuit 50 so that the refrigerant discharged by the compressor 330 is sent to the heat-source-side heat exchanger 340. Specifically, in the cooling mode, the flow path switching mechanism 332 connects the suction pipe 351 with the second gas-side pipe 355, and connects the discharge pipe 352 with the first gas-side pipe 353 (see a solid line in the flow path switching mechanism 332 in FIG. 2).

In the heating mode, the flow path switching mechanism 332 switches the flow direction of the refrigerant in the refrigerant circuit 50 so that the refrigerant discharged by the compressor 330 is sent to the utilization-side heat exchanger 10 of the heat exchange unit 100. Specifically, in the heating mode, the flow path switching mechanism 332 connects the suction pipe 351 with the first gas-side pipe 353, and connects the discharge pipe 352 with the second gas-side pipe 355 (see a broken line in the flow path switching mechanism 332 in FIG. 2).

### (2-1-4) Heat-source-side heat exchanger

The heat-source-side heat exchanger 340 is a heat exchanger that exchanges heat between air around the heat source unit 300 and a refrigerant flowing inside the heat-source-side heat exchanger 340. The heat-source-side heat exchanger 340 is, for example, a cross-fin type fin-and-tube heat exchanger, although the type is not limited. The heat-source-side heat exchanger 340 functions as a condenser (a radiator) when the operating mode of the heat load processing system 1 is in the cooling mode. Further, the heat-source-side heat exchanger 340 functions as an evaporator when the operating mode of the heat load processing system 1 is in the heating mode.

### (2-1-5) Second expansion mechanism

The second expansion mechanism 344 is a mechanism that expands a refrigerant flowing through the liquid-side pipe 354, to adjust a pressure and a flow rate of the refrigerant. In the present embodiment, the second expansion mechanism 344 is an electronic expansion valve whose opening degree is adjustable. However, the second expansion mechanism 344 is not limited to the electronic expansion valve. For example, the second expansion mechanism 344 may be a temperature automatic expansion valve having a temperature sensing cylinder, or may be a capillary tube.

### (2-1-6) Fan

The fan 342 is a mechanism to generate an air flow so that air passes through the heat-source-side heat exchanger 340, in order to promote heat exchange between the refrigerant and air in the heat-source-side heat exchanger 340. The fan 342 is, for example, a propeller fan, although the type is not limited.

### (2-1-7) Liquid-side shutoff valve

The liquid-side shutoff valve 302 is a valve that switches between communication and non-communication between the liquid-refrigerant connection pipe 52 and the liquid-side pipe 354. One end of the liquid-side shutoff valve 302 is connected with the liquid-refrigerant connection pipe 52, and another end of the liquid-side shutoff valve 302 is connected with the liquid-side pipe 354 (see FIG. 2).

### (2-1-8) Gas-side shutoff valve

The gas-side shutoff valve 304 is a valve that switches between communication and non-communication between the gas-refrigerant connection pipe 54 and the second gas-side pipe 355. One end of the gas-side shutoff valve 304 is connected with the gas-refrigerant connection pipe 54, and another end of the gas-side shutoff valve 304 is connected with the second gas-side pipe 355 (see FIG. 2).

### (2-1-9) Heat-source-side control board

The heat-source-side control board 395 functions as a control unit 95a together with a heat-exchange-unit side control board 95 of the heat exchange unit 100 described later. The control unit 95a will be described later.

The heat-source-side control board 395 has various electric circuits, a microcomputer including a CPU and a memory that stores a program executed by the CPU, and the like.

### (2-2) Refrigerant connection pipe

### (2-2-1) Liquid-refrigerant connection pipe

The liquid-refrigerant connection pipe 52 connects the liquid-side shutoff valve 302 of the heat source unit 300 to a liquid-side connecting port 100a of the heat exchange unit 100, and connects the liquid-side pipe 354 of the heat source unit 300 with an in-heat-exchange-unit liquid-side pipe 56 of the heat exchange unit 100. For connecting the liquid-refrigerant connection pipe 52 and the liquid-side connecting port 100a of the heat exchange unit 100, for example, a flare joint is used. However, a connection method between the liquid-refrigerant connection pipe 52 and the liquid-side connecting port 100a of the heat exchange unit 100 is not limited to the connection method using the flare joint, but a connection method using a flange joint or a brazing connection may be selected, for example.

### (2-2-2) Gas-refrigerant connection pipe

The gas-refrigerant connection pipe 54 connects the gas-side shutoff valve 304 of the heat source unit 300 to a gas-side connecting port 100b of the heat exchange unit 100, and connects the second gas-side pipe 355 of the heat source unit 300 with an in-heat-exchange-unit gas-side pipe 58 of the heat exchange unit 100. The gas-refrigerant connection pipe 54 and the gas-side connecting port 100b of the heat exchange unit 100 are connected by brazing, for example. However, a connection method between the gas-refrigerant connection pipe 54 and the gas-side connecting port 100b of the heat exchange unit 100 is not limited to the brazing connection, and a connection method using various pipe joints may be selected.

### (2-3) Liquid medium circuit

The liquid medium circuit 400 is a circuit in which the liquid medium circulates. The liquid medium circuit 400 is configured by connecting, with a pipe, the utilization-side heat exchanger 10 of the heat exchange unit 100 and the utilization-side equipment 410.

The liquid medium circuit 400 includes the utilization-side heat exchanger 10 and the pump 60 of the heat exchange unit 100, the utilization-side equipment 410, an in-heat-exchange-unit first liquid medium pipe 66, an in-heat-exchange-unit second liquid medium pipe 68, an in-heat-exchange-unit connection pipe 67, a first connection pipe 422, and a second connection pipe 424.

The utilization-side heat exchanger 10 and the pump 60 of the heat exchange unit 100 will be described later.

As described above, the utilization-side equipment 410 is, for example, an air handling unit or a fan coil unit. Further, for example, as described above, the utilization-side equipment 410 may be manufacturing equipment that cools or heats a manufacturing device or a manufactured product by using a liquid medium cooled or heated by the heat exchange unit 100, or may be a tank that stores the liquid medium cooled or heated by the heat exchange unit 100.

The in-heat-exchange-unit first liquid medium pipe 66 is a pipe that connects a liquid medium inlet 62 of the heat exchange unit 100 and the utilization-side heat exchanger 10 (particularly, a first heat exchanger 10a described later). In the in-heat-exchange-unit first liquid medium pipe 66, the pump 60 is arranged.

The in-heat-exchange-unit second liquid medium pipe 68 is a pipe that connects the utilization-side heat exchanger 10 (particularly, a second heat exchanger 10b described later) and a liquid medium outlet 64 of the heat exchange unit 100.

The in-heat-exchange-unit connection pipe 67 is a pipe that connects the first heat exchanger 10a and the second heat exchanger 10b, which will be described later.

The first connection pipe 422 is a pipe that connects the utilization-side equipment 410 and the liquid medium inlet 62 of the heat exchange unit 100. Although a connection method is not limited, the first connection pipe 422 is connected to the liquid medium inlet 62 of the heat exchange unit 100, for example, by a flange joint. Alternatively, the first connection pipe 422 may be screwed or welded to be connected to the liquid medium inlet 62 of the heat exchange unit 100.

The second connection pipe 424 is a pipe that connects the liquid medium outlet 64 of the heat exchange unit 100 and the utilization-side equipment 410. Although a connection method is not limited, the second connection pipe 424 is connected to the liquid medium outlet 64 of the heat exchange unit 100, for example, by a flange joint. Alternatively, the second connection pipe 424 may be screwed or welded to be connected to the liquid medium outlet 64 of the heat exchange unit 100.

When the pump 60 is operated, the liquid medium flows through the liquid medium circuit 400 as follows.

The liquid medium having flowed out from the utilization-side equipment 410 flows through the first connection pipe 422 toward the liquid medium inlet 62 of the heat exchange unit 100. The liquid medium having flowed into the heat exchange unit 100 from the liquid medium inlet 62 passes through the in-heat-exchange-unit first liquid medium pipe 66 to flow into the utilization-side heat exchanger 10. When the liquid medium passes through the utilization-side heat exchanger 10, the liquid medium is cooled or heated by exchanging heat with the refrigerant flowing through the refrigerant circuit 50. The liquid medium cooled or heated by the utilization-side heat exchanger 10 flows out from the utilization-side heat exchanger 10, and flows through the in-heat-exchange-unit second liquid medium pipe 68 toward the liquid medium outlet 64. The liquid medium having flowed out of the heat exchange unit 100 from the liquid medium outlet 64 flows through the second connection pipe 424 to flow into the utilization-side equipment 410.

### (2-4) Heat exchange unit

The heat exchange unit 100 is a unit that exchanges heat between a liquid medium sent to the utilization-side equipment 410 and a refrigerant, to perform at least one of cooling and heating of the liquid medium. As described above, the heat exchange unit 100 of the present embodiment is a unit that exchanges heat between the liquid medium sent to the utilization-side equipment 410 and the refrigerant, to perform both cooling and heating of the liquid medium.

Note that, when the heat exchange unit 100 is a unit intended only for cooling the liquid medium, the heat source unit 300 need not have the flow path switching mechanism 332. Further, when the heat exchange unit 100 is a unit intended only for heating the liquid medium, in particular, in a case of not performing a reverse cycle defrost operation for supplying the refrigerant discharged from the compressor 330 to the heat-source-side heat exchanger 340 to remove frost attached to the heat-source-side heat exchanger 340, the heat source unit 300 need not have the flow path switching mechanism 332 described above.

The heat exchange unit 100 mainly includes the casing 90, a drain pan 80, the utilization-side heat exchanger 10, a first expansion mechanism 20, the pump 60, a gas detection sensor 70, and an electric component box 92 (see FIGS. 4 to 7).

The heat exchange unit 100 has the first expansion mechanisms 20 of the same number as the number of the heat source units 300 (the same number as the number of the refrigerant circuits 50 including the heat source unit 300 and the heat exchange unit 100). In the present embodiment, the heat exchange unit 100 has four first expansion mechanisms 20.

The heat exchange unit 100 of the present embodiment has two utilization-side heat exchangers 10 (the first heat exchanger 10a and the second heat exchanger 10b) connected in series in the liquid medium circuit 400. However, the number of utilization-side heat exchangers 10 is an example, and is not limited to two. For example, the heat exchange unit 100 may have the utilization-side heat exchangers 10 of the same number (here, four) as the number of the heat source units 300 connected in series in the liquid medium circuit 400. Further, for example, the heat exchange unit 100 may have only one piece of utilization-side heat exchanger 10, the utilization-side heat exchanger 10 may be connected to all the (here, four) heat source units 300, and the refrigerant circuits 50 of the same number as the number of the heat source units 300 may be configured. Further, the heat exchange unit 100 may have a plurality of utilization-side heat exchangers 10 connected in parallel in the liquid medium circuit 400.

Further, the heat exchange unit 100 of the present embodiment has one pump 60. However, without limiting to this, the heat exchange unit 100 may have a plurality of pumps 60 connected in series or in parallel in the liquid medium circuit 400.

### (2-4-1) Casing

The casing 90 accommodates various components and various devices of the heat exchange unit 100, including the drain pan 80, the utilization-side heat exchanger 10, the first expansion mechanism 20, the pump 60, the gas detection sensor 70, and the electric component box 92. The casing 90 also accommodates an electric component that can be an ignition source described later (in the present embodiment, an electric component 93 accommodated in the electric component box 92, a terminal box 61 of the pump 60, and an electronic expansion valve as an example of the first expansion mechanism 20). A top surface and side surfaces of the heat exchange unit 100 are surrounded by a top panel and side plates (see FIG. 1).

In a lower part of the casing 90 (see FIG. 6), the drain pan 80 is arranged. Above the drain pan 80, the utilization-side heat exchanger 10 and the pump 60 are arranged (see FIG. 6). The first expansion mechanism 20 is arranged near an upper end of the utilization-side heat exchanger 10, in front of the utilization-side heat exchanger 10 (see FIG. 6). The electric component box 92 is arranged at an upper front face side of the casing 90 (see FIG. 7). The electric component box 92 is arranged above the utilization-side heat exchanger 10 and the pump 60 (see FIG. 6).

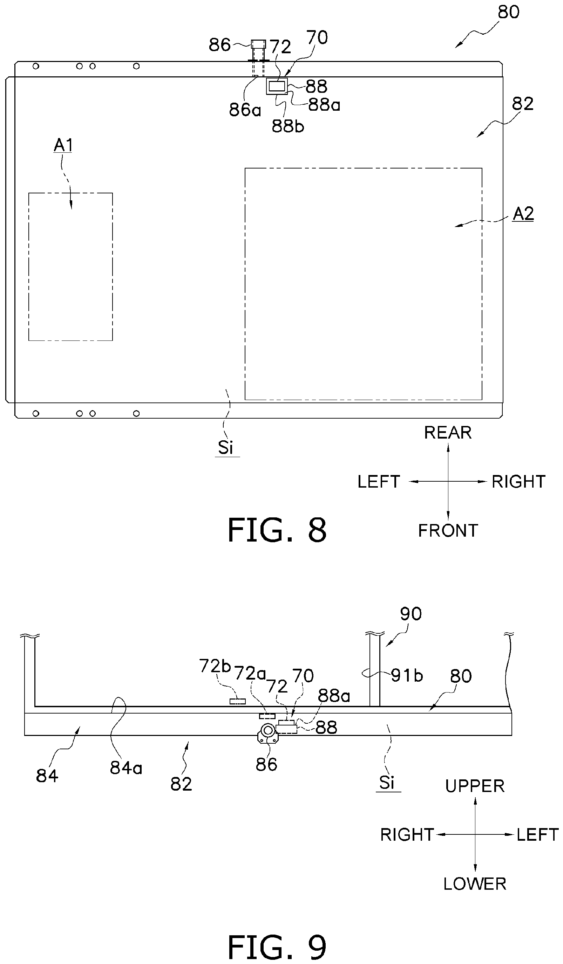

On the front face of the casing 90, an opening 91a for maintenance is provided (see FIG. 6). Further, on a back face of the casing 90, an opening 91b for maintenance is provided (see FIG. 9). The openings 91a and 91b of the casing 90 are closed by side plates of the casing 90 normally, that is, during operation of the heat load processing system 1. By removing the side plates of the casing 90 provided on the openings 91a and 91b, components and devices inside the casing 90 can be maintained or replaced.

On the front face of the casing 90 (in a lower right part of the casing 90 in FIG. 4), four liquid-side connecting ports 100a and four gas-side connecting ports 100b of the heat exchange unit 100 are provided. To each liquid-side connecting port 100a, the liquid-refrigerant connection pipe 52 is connected (see FIG. 2). To each gas-side connecting port 100b, the gas-refrigerant connection pipe 54 is connected (see FIG. 2). Further, on the back face of the casing 90, the liquid medium inlet 62 and the liquid medium outlet 64 of the heat exchange unit 100 are provided (see FIGS. 5 and 7). To the liquid medium inlet 62, the first connection pipe 422 is connected (see FIG. 2). To the liquid medium outlet 64, the second connection pipe 424 is connected (see FIG. 2).

Note that positions of the liquid-side connecting port 100a, the gas-side connecting port 100b, the liquid medium inlet 62, and the liquid medium outlet 64 are not limited to the positions drawn in the figure, and may be changed as appropriate.

### (2-4-2) Drain pan

The drain pan 80 will be described with reference to FIGS. 5 to 10.

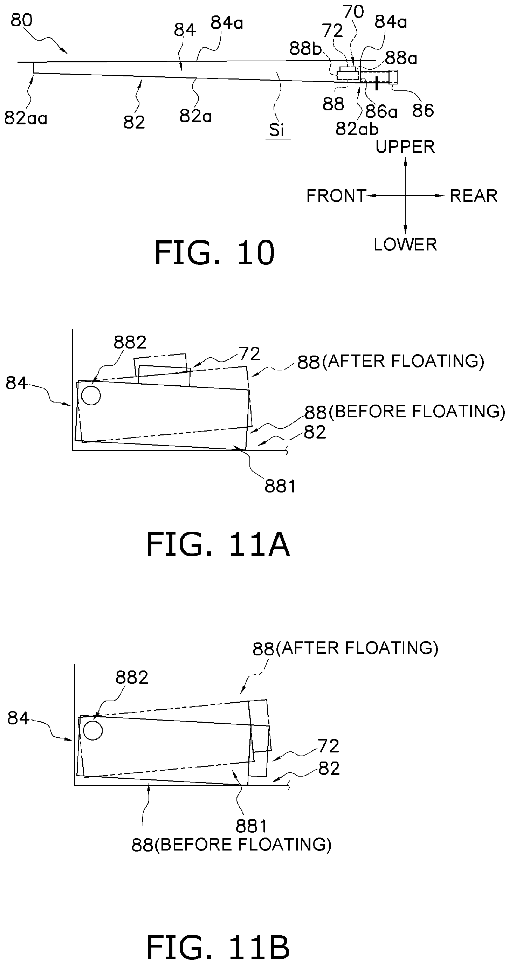

Note that FIG. 8 is a schematic plan view of the drain pan 80. FIG. 9 is a schematic rear view of a part of the casing 90 (near the drain pan 80) and the drain pan of FIG. 8. FIG. 10 is a schematic right side view of the drain pan 80.

The drain pan 80 is arranged in a lower part of the casing 90. In particular, in the present embodiment, the drain pan 80 is arranged in a lowermost part of the casing 90. The drain pan 80 is arranged below the utilization-side heat exchanger 10. Further, the drain pan 80 is arranged below the pump 60. The drain pan 80 receives condensation water generated on the utilization-side heat exchanger 10, the pump 60, pipes through which the liquid medium and the refrigerant flow, and the like. When the heat exchange unit 100 is installed outdoors, rainwater or the like also flows into the drain pan 80. Moreover, the drain pan 80 may have a function as a bottom plate of the casing 90.

The drain pan 80 has a bottom plate 82 and a side wall 84. The bottom plate 82 has a substantially rectangular shape in plan view (see FIGS. 8 to 10). The side wall 84 extends upward from an outer peripheral edge of the bottom plate 82 (see FIGS. 9 and 10).

A space formed above the bottom plate 82 of the drain pan 80 and below an upper end part 84a of the side wall 84 of the drain pan 80 is referred to here as an internal space Si of the drain pan 80. Condensation water having fallen into the internal space Si of the drain pan 80 is once received by the internal space Si, and discharged from a drain port provided in the drain pan 80. The drain port is an opening to discharge water in the internal space Si of the drain pan 80. The drain port is provided on at least one of the bottom plate 82 and the side wall 84 of the drain pan 80. In the present embodiment, a drain pipe 86 is attached to the side wall 84 arranged on a rear side of the drain pan 80 so as to communicate with the internal space Si of the drain pan 80, and an end part of the drain pipe 86 on the internal space Si side functions as a drain port 86a (see FIG. 8). The drain port 86a is provided in a center of the side wall 84 arranged on the rear side of the drain pan 80. In other words, the drain pipe 86 is attached to a center of the side wall 84 arranged on the rear side of the drain pan 80. The drain pipe 86 is attached to a lower part of the side wall 84 arranged on the rear side of the drain pan 80 (see FIG. 9).

Note that, in the present embodiment, the drain pan 80 is provided with only one drain port, but the configuration is not limited to this, and drain ports may be provided at a plurality of places. Further, the drain port need not be formed by a pipe fixed to the bottom plate 82 or the side wall 84 of the drain pan 80, but the drain port may be provided by simply forming a hole in the bottom plate 82 or the side wall 84 of the drain pan 80.

The bottom plate 82 of the drain pan 80 has an inclined part 82a that is inclined with respect to a horizontal plane. In particular, in the present embodiment, the entire bottom plate 82 is inclined with respect to the horizontal plane, and the entire bottom plate 82 functions as the inclined part 82a. In the present embodiment, the inclined part 82a is inclined so as to be lowered from a front side to a rear side, and has an upper end 82aa on the front side and a lower end 82ab on the rear side (see FIG. 10). That is, in the present embodiment, the bottom plate 82 is lowered toward the side wall 84 arranged on the rear side of the drain pan 80 provided with the drain port 86a, and water is easily discharged from the internal space Si of the drain pan 80 through the drain port 86a.

Note that the bottom plate 82 of the drain pan 80 need not be entirely inclined with respect to the horizontal plane as in the present embodiment. That is, the bottom plate 82 may have the inclined part 82a only partially. For example, in the bottom plate 82 of the drain pan 80, a region where condensation water is unlikely to fall need not be provided with an inclination.

### (2-4-3) Utilization-side heat exchanger

The utilization-side heat exchanger 10 includes the first heat exchanger 10a and the second heat exchanger 10b.

Note that, in the following description, features common to the first heat exchanger 10a and the second heat exchanger 10b will be described as a description of the utilization-side heat exchanger 10 without distinguishing as the first heat exchanger 10a or the second heat exchanger 10b.

The utilization-side heat exchanger 10 exchanges heat between the refrigerant and the liquid medium. In the present embodiment, the utilization-side heat exchanger 10 is a plate-type heat exchanger. However, a type of the utilization-side heat exchanger 10 is not limited to the plate-type heat exchanger, and it is sufficient to appropriately select a heat exchanger of a type that can be used as a heat exchanger between the refrigerant and the liquid medium.

To the first heat exchanger 10a and the second heat exchanger 10b, two in-heat-exchange-unit liquid-side pipes 56 and two in-heat-exchange-unit gas-side pipes 58 are individually connected. Further, to the first heat exchanger 10a, the in-heat-exchange-unit first liquid medium pipe 66 and the in-heat-exchange-unit connection pipe 67 are connected. To the second heat exchanger 10b, the in-heat-exchange-unit connection pipe 67 and the in-heat-exchange-unit second liquid medium pipe 68 are connected. The in-heat-exchange-unit connection pipe 67 is a pipe that connects a liquid medium flow path (not illustrated) in the first heat exchanger 10a with a liquid medium flow path in the second heat exchanger 10b.

When the pump 60 is operated, the liquid medium passes through the first connection pipe 422 and the in-heat-exchange-unit first liquid medium pipe 66 to flow into the first heat exchanger 10a, and passes through the liquid medium flow path (not illustrated) in the first heat exchanger 10a to flow out to the in-heat-exchange-unit connection pipe 67. The liquid medium having flowed out from the first heat exchanger 10a to the in-heat-exchange-unit connection pipe 67 passes through the in-heat-exchange-unit connection pipe 67 to flow into the second heat exchanger 10b. The liquid medium having flowed into the second heat exchanger 10b passes through the liquid medium flow path (not illustrated) in the second heat exchanger 10b, and further passes through the in-heat-exchange-unit second liquid medium pipe 68 and the second connection pipe 424, to be sent to the utilization-side equipment 410.

When the operating mode of the heat load processing system 1 is in the cooling mode, to each utilization-side heat exchanger 10, the refrigerant flows from the in-heat-exchange-unit liquid-side pipe 56 into a refrigerant flow path (not illustrated) in each utilization-side heat exchanger 10. The liquid medium flowing through the liquid medium flow path (not illustrated) in each utilization-side heat exchanger 10 is cooled by exchanging heat with the refrigerant flowing through the refrigerant flow path (not illustrated) in each utilization-side heat exchanger 10. The refrigerant having flowed through the refrigerant flow path (not illustrated) in each utilization-side heat exchanger 10 flows into the in-heat-exchange-unit gas-side pipe 58, and passes through the gas-refrigerant connection pipe 54 to flow into the second gas-side pipe 355 of the heat source unit 300.

Whereas, when the operating mode of the heat load processing system 1 is in the heating mode, to each utilization-side heat exchanger 10, the refrigerant flows from the in-heat-exchange-unit gas-side pipe 58 into the refrigerant flow path (not illustrated) in each utilization-side heat exchanger 10. The liquid medium flowing through the liquid medium flow path (not illustrated) in each utilization-side heat exchanger 10 is heated by exchanging heat with the refrigerant flowing through the refrigerant flow path (not illustrated) in each utilization-side heat exchanger 10. The refrigerant having flowed through the refrigerant flow path (not illustrated) in each utilization-side heat exchanger 10 flows into the in-heat-exchange-unit liquid-side pipe 56, and passes through the liquid-refrigerant connection pipe 52 to flow into the liquid-side pipe 354 of the heat source unit 300.

### (2-4-4) First expansion mechanism

The first expansion mechanism 20 is a mechanism that expands a refrigerant flowing through the in-heat-exchange-unit liquid-side pipe 56, to adjust a pressure and a flow rate of the refrigerant.

In the present embodiment, the first expansion mechanism 20 is an electronic expansion valve whose opening degree is adjustable. The electronic expansion valve as the first expansion mechanism 20 is arranged near an upper end of the utilization-side heat exchanger 10, in front of the utilization-side heat exchanger 10. However, the first expansion mechanism 20 is not limited to the electronic expansion valve. For example, the first expansion mechanism 20 may be a temperature automatic expansion valve having a temperature sensing cylinder, or may be a capillary tube.

### (2-4-5) Pump

The pump 60 is a pump that sends the liquid medium to the utilization-side equipment 410. The pump 60 is arranged in the in-heat-exchange-unit first liquid medium pipe 66.

The pump 60 is, for example, a constant speed centrifugal pump. However, the pump 60 is not limited to the centrifugal pump, and a type of the pump 60 may be appropriately selected. Further, the pump 60 may be, for example, a pump having a variable flow rate.

Note that, in the present embodiment, the pump 60 is arranged upstream of the utilization-side heat exchanger 10 in a flow direction of the liquid medium in the liquid medium circuit 400, in other words, in the in-heat-exchange-unit first liquid medium pipe 66. However, without limiting to this, the pump 60 may be arranged downstream of the utilization-side heat exchanger 10 in the flow direction of the liquid medium in the liquid medium circuit 400, in other words, in the in-heat-exchange-unit second liquid medium pipe 68.

### (2-4-6) Gas detection sensor

The gas detection sensor 70 is a sensor that has a detection element 72 and detects the presence or absence of refrigerant gas at a place where the detection element 72 is arranged.

The detection element 72 is, for example, a semiconductor-type sensor element. Electrical conductivity of the semiconductor-type detection element changes depending on a state where no refrigerant gas is present in the surroundings or a state where refrigerant gas is present in the surroundings. The gas detection sensor 70 includes a detection circuit (not illustrated) that is electrically connected to the detection element 72, and detects the presence or absence of the refrigerant gas at the place where the detection element 72 is arranged, by detecting a change in electrical conductivity of the detection element 72 with the detection circuit.

However, the detection element 72 is not limited to the semiconductor-type element, and may be any element capable of detecting the refrigerant gas. For example, the gas detection sensor 70 may include an infrared light source (not illustrated) and an infrared detection element (not illustrated) as the detection element 72, and may detect the presence or absence of the refrigerant gas at the place where the detection element 72 is arranged, by detecting a change in a detection amount of infrared rays of the detection element 72, which changes depending on the presence or absence of refrigerant gas, with a detection circuit that is electrically connected to the detection element 72.

As described above, since the refrigerant gas has a higher density than air, the refrigerant gas easily moves to a lower position when the refrigerant leaks in the heat exchange unit 100. Therefore, it is preferable that the detection element 72 of the gas detection sensor 70 is arranged in the internal space Si of the drain pan 80 located at the lower part in the casing 90. Preferably, the detection element 72 is arranged on the lower end 82ab side of the inclined part 82a of the bottom plate 82 of the drain pan 80 (in the present embodiment, a rear end side of the bottom plate 82). Further, preferably, the detection element 72 is arranged near the drain port 86a, which is a discharge port of water from the internal space Si of the drain pan 80.

In the present embodiment, the detection element 72 of the gas detection sensor 70 is arranged on the lower end 82ab side of the inclined part 82a in the internal space Si of the drain pan 80 (see FIG. 10). Further, the detection element 72 of the gas detection sensor 70 is arranged at a position adjacent to the drain port 86a provided on the side wall 84 on the rear side of the drain pan 80 (see FIGS. 8 to 10). By arranging the detection element 72 at such a position where refrigerant gas is likely to accumulate, highly reliable refrigerant leakage detection is possible.

Note that the position where the detection element 72 of the gas detection sensor 70 is arranged is an example, and is not limited to the position drawn with reference numeral 72 in FIGS. 8 to 10.

For example, the position where the detection element 72 of the gas detection sensor 70 is arranged may be, for example, away from the drain port 86a, in the vicinity of the side wall 84 on the rear side of the drain pan 80 (on the lower end 82ab side of the inclined part 82a).

In addition, for example, when a place is specified where there is a relatively high possibility of leakage of the refrigerant gas, the detection element 72 of the gas detection sensor 70 may be arranged near the place where the possibility of leakage of the refrigerant gas is relatively high, in the internal space Si of the drain pan 80. In this case, the detection element 72 of the gas detection sensor 70 may be arranged at a place other than the lower end 82ab side of the inclined part 82a (for example, the upper end 82aa side of the inclined part 82a). For example, the detection element 72 of the gas detection sensor 70 may be arranged near the liquid-side connecting port 100a and the gas-side connecting port 100b, in the internal space Si of the drain pan 80.

Further, for example, the position where the detection element 72 of the gas detection sensor 70 is arranged may be, for example, above the upper end part 84a of the side wall 84 of the drain pan 80 (above the internal space Si of the drain pan 80, in the casing 90), as shown by reference numeral 72b in FIG. 9.

The detection element 72 of the gas detection sensor 70 is arranged below the electric component that can be an ignition source, regardless of whether or not being placed in the internal space Si of the drain pan 80 (see FIGS. 6 and 7). By arranging the detection element 72 below the electric component that can be an ignition source, refrigerant leakage is easily detected before the refrigerant gas reaches a height position of the electric component that can be an ignition source from the bottom side of the casing 90, even if the refrigerant leaks in the heat exchange unit 100.

Note that the electric component that can be an ignition source include an electric component that may generate an electric spark. In the present embodiment, the electric components that can be an ignition source include: the electric components 93 such as an electromagnetic switch, a contactor, and a relay accommodated in the electric component box 92, which will be described later; an electronic expansion valve as an example of the first expansion mechanism 20; and the terminal box 61 of the pump 60. An electric wire 61a for supply of electric power to a motor 60a of the pump 60 is connected to the terminal box 61 of the pump 60.

Further, although it is not mounted on the heat exchange unit 100 of the present embodiment, a heater may be arranged in the heat exchange unit 100 when the heat exchange unit 100 is installed in a cold region. Depending on specifications, the heater can be hot enough to be an ignition source. It is preferable that the electric component that can become hot enough to be an ignition source is also arranged above the detection element 72 of the gas detection sensor 70.

Further, the detection element 72 of the gas detection sensor 70 is arranged below the liquid-side connecting port 100a and the gas-side connecting port 100b of the heat exchange unit 100, which is where refrigerant is relatively likely to leak (see FIGS. 6 and 7). Whereas, the electric components that can be an ignition source as described above are preferably arranged above the liquid-side connecting port 100a and the gas-side connecting port 100b of the heat exchange unit 100. Such an arrangement allows refrigerant leakage to be easily detected before the refrigerant gas reaches a height position of the electric component that can be an ignition source from the bottom side of the casing 90, even if the refrigerant leaks at the liquid-side connecting port 100a or the gas-side connecting port 100b of the heat exchange unit 100.

Moreover, preferably, the detection element 72 of the gas detection sensor 70 is arranged at a position lower than a height position of 300 mm above the bottom of the casing 90. Such an arrangement allows refrigerant leakage to be easily detected before the refrigerant gas reaches the height position of the electric component that can be an ignition source from the bottom side of the casing 90, even if the refrigerant leaks at the heat exchange unit 100. Further, by arranging the detection element 72 of the gas detection sensor 70 at the position lower than the height position of 300 mm above the bottom of the casing 90, it is possible to avoid increasing a size of the heat exchange unit 100 (the casing 90) while reducing a possibility of ignition when the refrigerant leaks.

Further, preferably, the electric component that can be an ignition source (in the present embodiment, the electric components 93 such as an electromagnetic switch, a contactor, and a relay accommodated in the electric component box 92, an electronic expansion valve as an example of the first expansion mechanism 20, and the terminal box 61 of the pump 60) are arranged at a height position of 300 mm or more from a bottom of the casing 90 (see FIGS. 6 and 7). By arranging the electric component that can be an ignition source at such a height position, the possibility of ignition with the electric component in the casing 90 as the ignition source is reduced even if the refrigerant leaks.

Further, if the refrigerant leaks, there is a high possibility that the refrigerant leaks from the utilization-side heat exchanger 10, or a refrigerant pipe 57 including the in-heat-exchange-unit liquid-side pipe 56 and the in-heat-exchange-unit gas-side pipe 58. Therefore, the detection element 72 of the gas detection sensor 70 is preferably arranged at the following position.

In plan view, an inside of the casing 90 is sectioned into at least a pump arrangement area A1 where the pump 60 is arranged, and a refrigerant side area A2 where the refrigerant pipe 57 through which the refrigerant flows or the utilization-side heat exchanger 10 is arranged (see FIGS. 5 and 8). That is, in plan view, the pump arrangement area A1 and the refrigerant side area A2 exist inside the casing 90. As shown in FIG. 8, the detection element 72 of the gas detection sensor 70 is preferably arranged closer to the refrigerant side area A2 than the pump arrangement area A1.

Further, from the viewpoint of maintenance, the detection element 72 of the gas detection sensor 70 is preferably arranged in a space near the opening 91b for maintenance, in the casing 90. The space near the opening 91b is a space accessible to a worker from the opening 91b. For example, the space near the opening 91b is a space within hand reach from the opening 91b (for example, a space within 50 cm from the opening 91b). An arrangement of the detection element 72 of the gas detection sensor 70 at such a position allows the detection element 72 to be easily replaced and inspected by removing the side plate of the casing 90 that closes the opening 91b.

Further, since the detection element 72 of the gas detection sensor 70 detects the refrigerant gas, it is preferable that the detection element 72 is arranged at a position that is less likely to be immersed even if condensation water accumulates in the internal space Si of the drain pan 80.

For example, preferably, the heat exchange unit 100 has a float 88 that is arranged in the internal space Si of the drain pan 80, and the detection element 72 is attached to an upper surface 88a or a side surface 88b of the float 88. The float 88 is a member configured to float on a water surface when condensation water accumulates in the internal space Si of the drain pan 80.

A structure of the float 88 will be more specifically described. For example, specifically, the float 88 has a main body 881, and a swing shaft 882 that is swingably supported by a support part (not illustrated) provided on the side wall 84 of the drain pan 80 or a frame (not illustrated) of the casing 90 (see FIGS. 11A and 11B). The main body 881 is configured to float on water. The detection element 72 of the gas detection sensor 70 may be attached to the upper surface 88a of the float 88 (an upper surface of the main body 881) as shown in FIG. 11A, or may be attached to the side surface 88b (a side surface of the main body 881) of the float 88 as shown in FIG. 11B. When there is no water in the drain pan 80, the main body 881 of the float 88 is located at a first position. Although not limited, the main body 881 of the float 88 located at the first position is in contact with the bottom plate 82 of the drain pan 80, as shown by solid lines in FIGS. 11A and 11B. Whereas, when water accumulates in the drain pan 80, the main body 881 of the float 88 swings around the swing shaft 882 and floats due to buoyancy as shown by two-dot chain lines in FIGS. 11A and 11B. Such a configuration facilitates suppression of immersion of the detection element 72 of the gas detection sensor 70, even when condensation water accumulates in the internal space Si of the drain pan 80. Therefore, even if the drain pipe 86 is clogged for some reason and water is not discharged from the drain port 86a, the gas refrigerant can be detected by the gas detection sensor 70 when the refrigerant leaks.

Alternatively, the heat exchange unit 100 need not have the float 88. Then, the detection element 72 of the gas detection sensor 70 may be directly attached to the side wall 84 of the drain pan 80 or the frame (not illustrated) of the casing 90. In this case, the detection element 72 of the gas detection sensor 70 is preferably arranged at a position that is less likely to be immersed, for example, a position higher than the drain port 86a in the internal space Si of the drain pan 80, as shown by reference numeral 72a in FIG. 9.

### (2-4-7) Electric component box

The electric component box 92 is a case that accommodates various electric components. The electric component box 92 accommodates the heat-exchange-unit side control board 95 and a power source terminal block (not illustrated). Further, the electric component box 92 accommodates the electric component 93 such as an electromagnetic switch, a contactor, and a relay. The electric component 93 need not include all of the electromagnetic switch, the contactor, and the relay, but may include any of the electromagnetic switch, the contactor, and the relay. Note that the electric components accommodated in the electric component box 92 are not limited to those exemplified, and various electric components are accommodated as needed.

The heat-exchange-unit side control board 95 functions as the control unit 95a together with the heat-source-side control board 395 of the heat source unit 300. The heat-exchange-unit side control board 95 has various electric circuits, a microcomputer including a CPU and a memory that stores a program executed by the CPU, and the like.

The control unit 95a controls an operation of each unit of the heat load processing system 1.

The control unit 95a is electrically connected to various devices of the heat source unit 300 and the heat exchange unit 100. The various devices of the heat source unit 300 and the heat exchange unit 100 connected to the control unit 95a include: the compressor 330, the flow path switching mechanism 332, the second expansion mechanism 344, and the fan 342 of the heat source unit 300; and the first expansion mechanism 20 and the pump 60 of the heat exchange unit 100. Further, the control unit 95a is communicably connected to various sensors provided to the heat source unit 300 and the heat exchange unit 100, and receives measured values from the various sensors (not illustrated). The various sensors provided to the heat exchange unit 100 include, but not limited to, for example, a temperature sensor that is provided in the in-heat-exchange-unit liquid-side pipe 56 or the in-heat-exchange-unit gas-side pipe 58 and measures a temperature of the refrigerant, a pressure sensor provided in the in-heat-exchange-unit liquid-side pipe 56, a temperature sensor provided in the in-heat-exchange-unit first liquid medium pipe 66, the in-heat-exchange-unit connection pipe 67, and the in-heat-exchange-unit second liquid medium pipe 68 and measures a temperature of the liquid medium, and the like. Further, the various sensors provided to the heat source unit 300 include, but not limited to, for example, a temperature sensor that is provided in the suction pipe 351 and measures a suction temperature, a temperature sensor that is provided in the discharge pipe 352 and measures a discharge temperature, and a pressure sensor that is provided in the discharge pipe 352 and measures a discharge pressure. Further, the control unit 95a is communicably connected to the gas detection sensor 70 of the heat source unit 300.

The control unit 95a controls an operation of various devices of the heat source unit 300 and the heat exchange unit 100 in response to an operation or stop command given from an operation device (not illustrated). Further, the control unit 95a controls a state of the flow path switching mechanism 332 of the heat source unit 300 in accordance with an operating mode (the cooling mode or the heating mode) of the heat load processing system 1. In addition, the control unit 95a controls an operation of various devices of the heat source unit 300 and the heat exchange unit 100 such that a liquid medium is cooled or heated to reach a predetermined target temperature and flows out from the liquid medium outlet 64 of the heat exchange unit 100. Note that an operating principle of a vapor compression refrigerator is generally well known, and thus a description thereof is omitted here. In addition, when the gas detection sensor 70 detects leakage of refrigerant gas, the control unit 95a controls various devices such that various devices of the heat source unit 300 and the heat exchange unit 100 perform a predetermined operation at a time of leakage.

### (3) Characteristics

### (3-1)

The heat exchange unit 100 of the above-described embodiment exchanges heat between a liquid medium sent to utilization-side equipment 410 and the refrigerant, to perform at least one of cooling and heating of the liquid medium. The heat exchange unit 100 includes the utilization-side heat exchanger 10, the electric component that can be an ignition source, the casing 90, and the gas detection sensor 70. The utilization-side heat exchanger 10 exchanges heat between the refrigerant that is flammable and the liquid medium. The casing 90 accommodates the utilization-side heat exchanger 10 and the electric component that can be an ignition source. The gas detection sensor 70 has the detection element 72 arranged below the electric component that can be an ignition source, and detects the presence or absence of refrigerant gas at a place where the detection element 72 is arranged.

Moreover, in the present embodiment, the electric component that can be an ignition source includes, for example, the electric component 93. The electric component 93 includes at least one of an electromagnetic switch, a contactor, and a relay. In the present embodiment, the electric component 93 is accommodated in the electric component box 92. Further, in the present embodiment, the electric component that can be an ignition source includes the terminal box 61 of the pump 60. The electric wire 61a for supply of electric power to the motor 60a of the pump 60 is connected to the terminal box 61 of the pump 60. Further, in the present embodiment, the electric component that can be an ignition source includes an electronic expansion valve as an example of the first expansion mechanism 20.

Note that the heat exchange unit 100 need not have all of the exemplified electric components that can be an ignition source, and may have some of them. Further, in addition to the exemplified electric components that can be an ignition source or in place of the exemplified electric components that can be an ignition source, the heat exchange unit 100 may have an electric component that can be an ignition source other than those exemplified. For example, when the pump 60 has a variable flow rate, the electric component that can be an ignition source may include an inverter board (not illustrated) for the pump 60, accommodated in the electric component box 92.

The refrigerant gas is heavier than air as described above. Therefore, when the refrigerant leaks, the leaked refrigerant gas tends to stagnate on the lower side. In this heat exchange unit 100, since the detection element 72 of the gas detection sensor 70 is arranged below the electric component that can be an ignition source, it is easy to detect refrigerant leakage before ignition with the electric equipment inside the casing 90, even if the refrigerant leaks.

### (3-2)

In the heat exchange unit 100 of the above-described embodiment, the detection element 72 of the gas detection sensor 70 is arranged at a position lower than a height position of 300 mm above the bottom of the casing 90.

Since the detection element 72 of the gas detection sensor 70 is arranged at the position lower than the height position of 300 mm from the bottom of the casing 90 where the refrigerant gas heavier than air tends to accumulate, it is easy to detect refrigerant leakage relatively early even if the refrigerant leaks, and the possibility of ignition is likely to be reduced.

Further, by setting a reference value to a relatively small value of 300 mm, it is possible to avoid increasing a size of the heat exchange unit 100 (the casing 90) while reducing a possibility of ignition when the refrigerant leaks.

### (4) Modified examples

### (4-1) Modified Example 1A

The heat exchange unit 100 of the above-described embodiment includes the pump 60, but the present invention is not limited to this. The pump 60 may be installed outside the casing 90 separately from the heat exchange unit 100.

### (4-2) Modified Example 1B

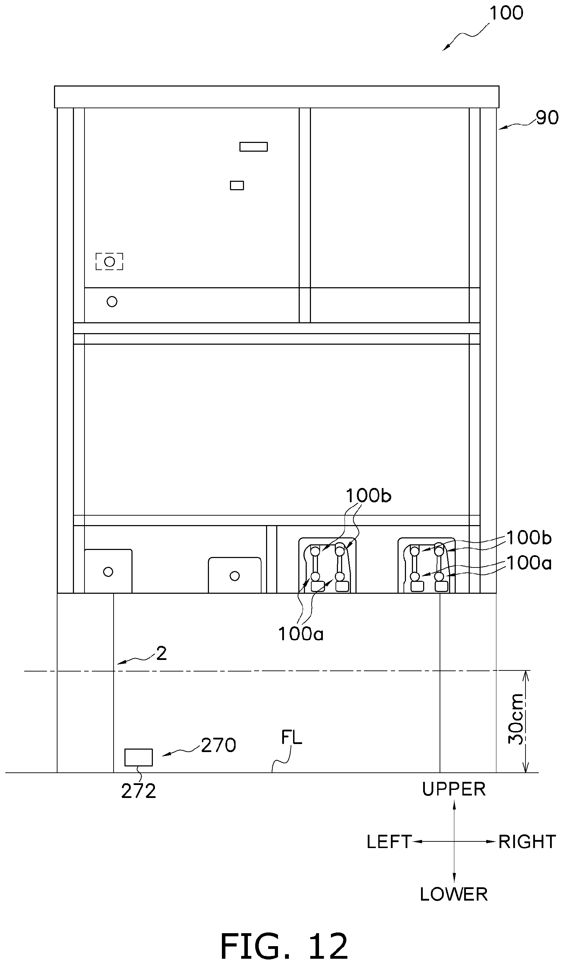

The heat exchange unit 100 may include a gas detection sensor 270 with a detection element 272 arranged outside the casing 90 (see FIG. 12), in addition to the gas detection sensor 70 having the detection element 72 arranged in the casing 90, or in place of the gas detection sensor 70 having the detection element 72 arranged in the casing 90.

The gas detection sensor 270 is a sensor that detects the presence or absence of refrigerant gas at a place where the detection element 272 is arranged. The gas detection sensor 270 is similar to the gas detection sensor 70 except for the installation place of the detection element 272.

Since the heat exchange unit 100 has the gas detection sensor 270, it is possible to detect refrigerant gas with the gas detection sensor 270 and enhance the safety even if the refrigerant gas flows out of the casing 90.

The detection element 272 of the gas detection sensor 270 is preferably arranged below the electric component that can be an ignition source described above, in the heat exchange unit 100. In particular, when the gas detection sensor 270 is used instead of the gas detection sensor 70 having the detection element 72 arranged in the casing 90, the detection element 272 of the gas detection sensor 270 is arranged below the electric component that can be an ignition source described above, in the heat exchange unit 100.

Since the refrigerant gas has a higher density than that of air as described above, the detection element 272 of the gas detection sensor 270 is preferably arranged near a floor surface FL of a unit installation space (for example, the machine room R) where the heat exchange unit 100 is installed. For example, the detection element 272 is preferably arranged at a height position within 300 mm from the floor surface FL on which the heat exchange unit 100 is installed, in the machine room R.

For example, in some cases, the heat exchange unit 100 may be installed on a foundation (a stand) 2 provided on the floor surface FL in the machine room R (see FIG. 12). In such a case, the detection element 272 of the gas detection sensor 270 is preferably arranged near the floor surface FL of the machine room R. The detection element 272 of the gas detection sensor 270 is preferably arranged at a height position up to 300 mm from the floor surface FL of the machine room R. At this time, the detection element 272 of the gas detection sensor 270 may be arranged at a position lower than a bottom of the casing 90 of the heat exchange unit 100, as shown in FIG. 12.

### (4-3) Modified Example 1C

In the above-described embodiment, a liquid medium cooled or heated by the heat exchange unit 100 circulates in the liquid medium circuit 400, but the configuration is not limited to this. For example, when the cooled or heated liquid medium itself is used directly, the liquid medium sent to the utilization-side equipment 410 (for example, a tank) may be used as it is without circulating in the liquid medium circuit 400.

### <Second Embodiment>

### (1) Overall configuration

A heat exchange unit 200 according to a second embodiment and a heat load processing system 201 including the heat exchange unit 100 will be described with reference to the drawings.

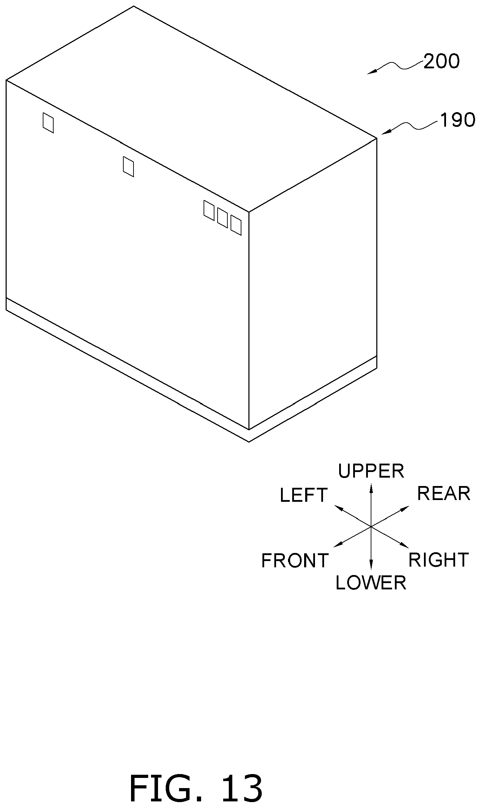

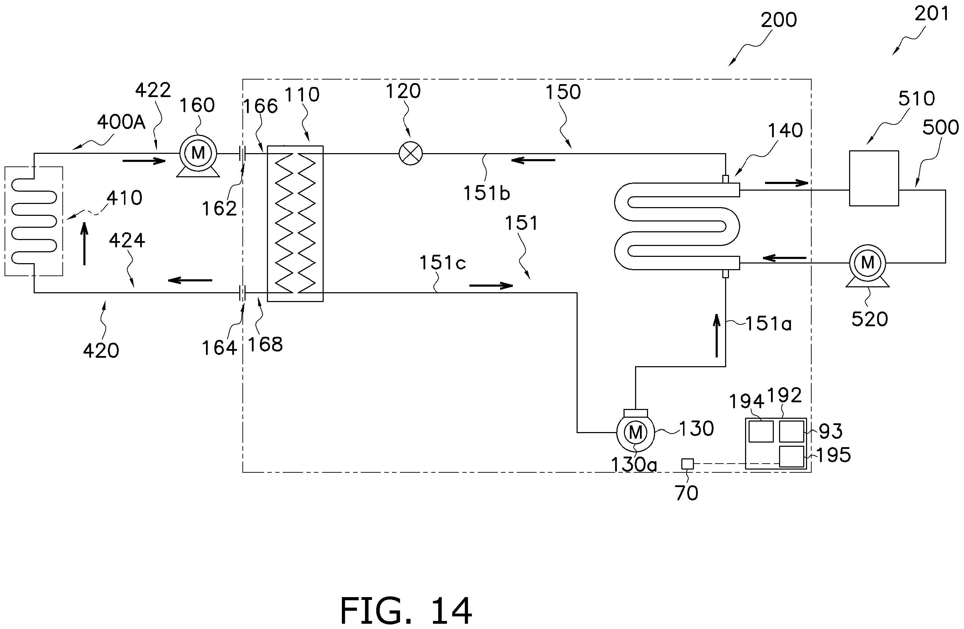

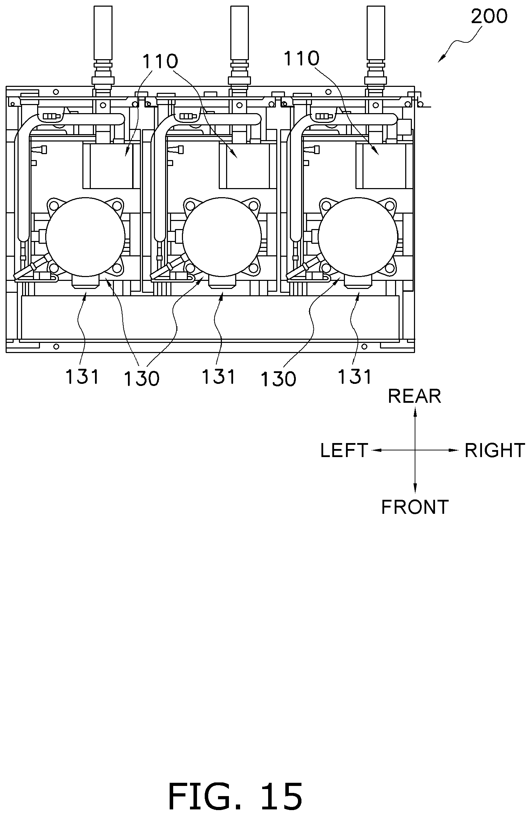

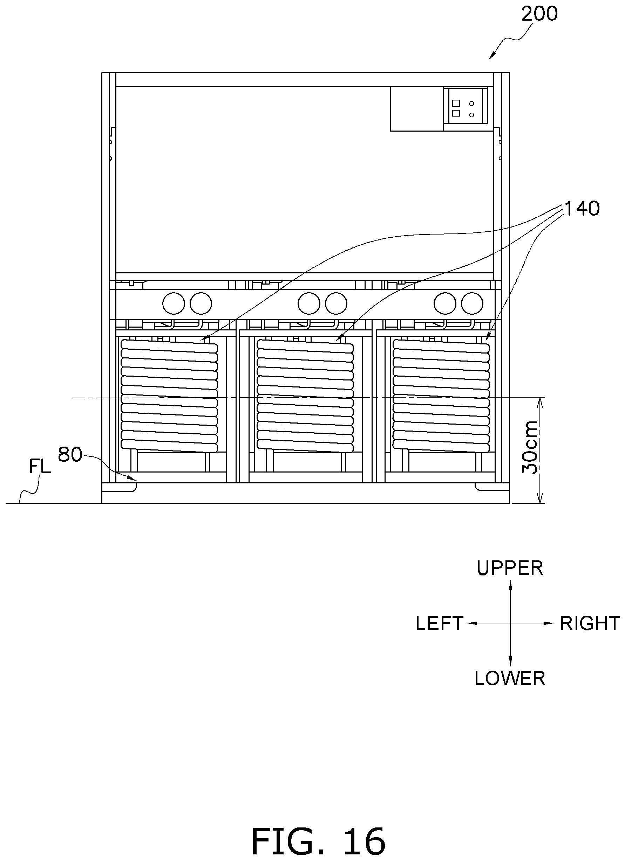

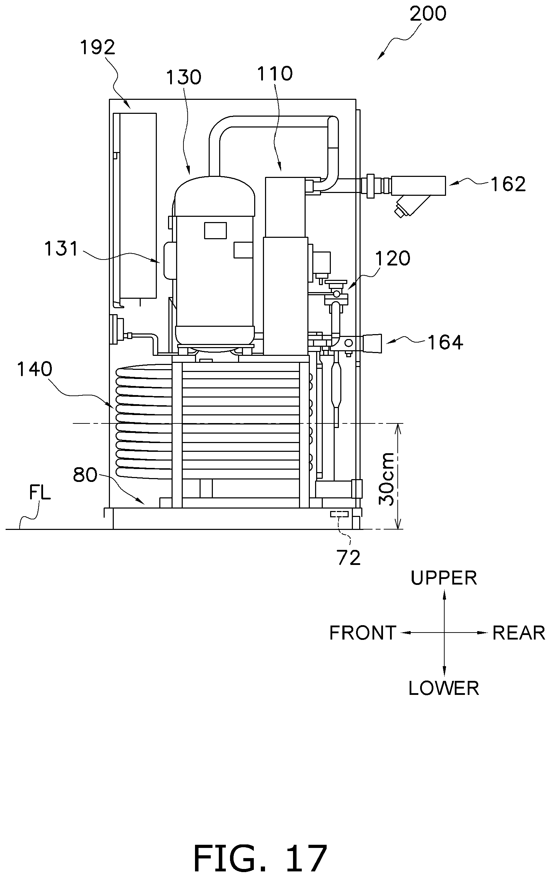

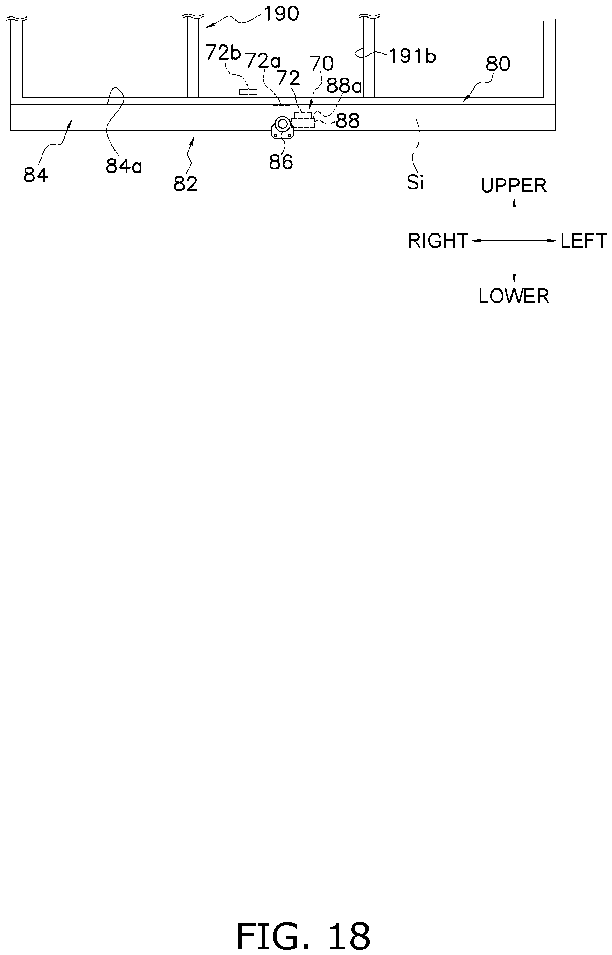

FIG. 13 is a perspective view of the heat exchange unit 200. FIG. 14 is a schematic configuration diagram of the heat load processing system 201 including the heat exchange unit 200. Note that the heat exchange unit 200 has three systems of an identical refrigerant circuit 150, but only one system of the refrigerant circuit 150 is drawn in FIG. 14. FIG. 15 is a schematic plan view of a lower part inside a casing 190 of the heat exchange unit 200. FIG. 16 is a schematic front view of the heat exchange unit 200 with a side plate of the casing 190 removed. FIG. 17 is a schematic right side view of the heat exchange unit 200 with a side plate of the casing 190 removed. FIG. 18 is a schematic rear view of a part of the casing 190 of the heat exchange unit 200 (near a drain pan 80) and the drain pan 80.

Note that, in the following description, expressions indicating directions such as "upper", "lower", "left", "right", "front (front face)", and "rear (back face)" may be used. Unless otherwise specified, these directions are indicated by arrows in figures.

First, a difference between the heat load processing system 201 and the heat load processing system 1 of the first embodiment will be outlined.

In the heat load processing system 1, the refrigerant is cooled or heated by exchanging heat between air around the heat source unit 300 and the refrigerant, in the heat-source-side heat exchanger 340. Whereas, in the heat load processing system 201, a refrigerant is cooled or heated by heat exchange between the refrigerant and a heat-source-side liquid medium flowing through a heat-source-side liquid medium circuit 500. In the present embodiment, the heat load processing system 201 is a system in which the refrigerant is cooled by cooling water flowing through the heat-source-side liquid medium circuit 500, and a liquid medium sent to utilization-side equipment 410 is cooled by the refrigerant in the heat exchange unit 200. However, without limiting to this, the heat load processing system 201 may be, for example, a system in which the refrigerant is heated by a heat-source-side liquid medium (for example, waste warm water) flowing through the heat-source-side liquid medium circuit 500, and a liquid medium sent to the utilization-side equipment 410 is heated by the refrigerant in the heat exchange unit 200. In addition, for example, the heat load processing system 201 may be a system capable of execution by switching between: a cooling mode in which the refrigerant is cooled by a relatively low temperature heat-source-side liquid medium flowing through the heat-source-side liquid medium circuit 500, and a liquid medium sent to the utilization-side equipment 410 is cooled by the refrigerant in the heat exchange unit 200; and a heating mode in which the refrigerant is heated by a relatively high temperature heat-source-side liquid medium flowing through the heat-source-side liquid medium circuit 500, and a liquid medium sent to the utilization-side equipment 410 is heated by the refrigerant in the heat exchange unit 200. Note that, in the following, the liquid medium flowing through the heat-source-side liquid medium circuit 500 is referred to as a heat-source-side liquid medium, while the liquid medium sent to the utilization-side equipment 410 is simply referred to as a liquid medium.

Further, in the heat load processing system 1, the refrigerant circuit 50 is formed by the heat source unit 300 and the heat exchange unit 100. Whereas, in the heat load processing system 201, the heat exchange unit 200 has the entire refrigerant circuit 150. In the present embodiment, one heat exchange unit 200 has three systems of the refrigerant circuit 150. However, the heat exchange unit 200 may have one or two systems of refrigerant circuit 150, or four or more systems of refrigerant circuit 150.

Hereinafter, an overall configuration of the heat load processing system 201 will be described.

The heat load processing system 201 mainly includes the heat exchange unit 200, the heat-source-side liquid medium circuit 500, and the utilization-side equipment 410.

The heat exchange unit 200 is a device that exchanges heat between a liquid medium sent to the utilization-side equipment 410 and a refrigerant, to perform at least one of cooling and heating of the liquid medium. The liquid medium cooled or heated by the liquid refrigerant in the heat exchange unit 200 is sent to the utilization-side equipment 410.

The exemplified heat exchange unit 200 drawn in FIG. 14 is a unit that only cools the liquid medium by exchanging heat between the liquid medium and the refrigerant. However, for example, the configuration is not limited to this, and the heat exchange unit 200 may be a unit that only heats the liquid medium by exchanging heat between the liquid medium and the refrigerant. In addition, similarly to the heat exchange unit 100 of the first embodiment, the heat exchange unit 200 may be, for example, a device capable of both cooling and heating of the liquid medium by exchanging heat between the liquid medium and the refrigerant.

Note that the liquid medium and the refrigerant used in the present embodiment are similar to the liquid medium and the refrigerant described in the first embodiment. The description is omitted here. The heat-source-side liquid medium used in the present embodiment is, for example, water or brine.

The heat-source-side liquid medium circuit 500 is a liquid medium circuit in which the heat-source-side liquid medium that cools the refrigerant in the heat exchange unit 200 circulates. The heat-source-side liquid medium circuit 500 mainly includes heat source equipment 510 and a heat-source-side pump 520.

In the present embodiment, the heat source equipment 510 is equipment to cool the heat-source-side liquid medium. For example, the heat source equipment 510 is a cooling tower. For example, the cooling tower may be an open type that directly cools the heat-source-side heat medium, or may be a closed type that indirectly cools the heat-source-side heat medium. A type of the heat-source-side liquid medium may be appropriately determined in accordance with a type of the cooling tower and the like. An installation place is not limited, but the heat source equipment 510 is installed, for example, on a rooftop or a space around a building, or the like.

The heat-source-side pump 520 is a pump that sends the heat-source-side liquid medium cooled by the heat source equipment 510, to the heat exchange unit 200. The heat-source-side pump 520 is, for example, a constant speed centrifugal pump. However, the heat-source-side pump 520 is not limited to the centrifugal pump, and a type of the heat-source-side pump 520 may be appropriately selected. Further, the heat-source-side pump 520 may be, for example, a pump having a variable flow rate. Although an installation place is not limited, the heat-source-side pump 520 is installed in a same machine room R as the heat exchange unit 200, for example.

The utilization-side equipment 410 is similar to the utilization-side equipment 410 in the heat load processing system 1 of the first embodiment. However, in the second embodiment, the utilization-side equipment 410 is equipment that uses a liquid medium cooled by the refrigerant. For example, although not limited, the utilization-side equipment 410 is an air handling unit or a fan coil unit used only for cooling. Note that the utilization-side equipment 410 is not limited to the equipment that uses the liquid medium cooled by the refrigerant. When the heat load processing system 201 is configured so that the liquid medium is heated by the refrigerant in the heat exchange unit 200, the utilization-side equipment 410 may be, for example, equipment that uses the liquid medium heated by the refrigerant.

FIG. 14 shows only one piece of utilization-side equipment 410. However, similarly to the first embodiment, the heat load processing system 201 may include a plurality of pieces of the utilization-side equipment. In addition, when the heat load processing system 201 includes the plurality of pieces of the utilization-side equipment, types of the pieces of the utilization-side equipment may all be the same, or the pieces of the utilization-side equipment may include a plurality of types of equipment.

### (2) Detailed configuration

The heat exchange unit 200 will be described in detail.

A liquid medium circuit 400A in the second embodiment is similar to the liquid medium circuit 400 of the first embodiment except for the fact that a pump 160 (a device similar to the pump 60 of the first embodiment) is arranged outside of the heat exchange unit 200 (a first connection pipe 422), and for a configuration of a liquid medium pipe in the heat exchange unit 200. Here, in the description of the heat exchange unit 200, the liquid medium pipe in the heat exchange unit 200 will be described, and detailed description of other liquid medium circuit 400A will be omitted.

### (2-1) Heat exchange unit

The heat exchange unit 200 will be described with reference to FIGS. 13 to 18.

The heat exchange unit 200 has three systems of the refrigerant circuit 150. In FIG. 14, only one system of the three systems of the refrigerant circuit 150 is drawn. Since other refrigerant circuits 150 are similar to the refrigerant circuit 150 described here, a description thereof will be omitted here.

Since an installation place of the heat exchange unit 200 is similar to the installation place of the heat exchange unit 100 of the first embodiment, a description thereof will be omitted.

The heat exchange unit 200 mainly includes a compressor 130, a heat-source-side heat exchanger 140, an expansion mechanism 120, a utilization-side heat exchanger 110, the casing 190, the drain pan 80, a gas detection sensor 70, and an electric component box 192. The compressor 130, the heat-source-side heat exchanger 140, the expansion mechanism 120, and the utilization-side heat exchanger 110 are connected by a refrigerant pipe 151, to form the refrigerant circuit 150. The refrigerant pipe 151 includes a first refrigerant pipe 151a that connects a discharge side of the compressor 130 and a gas side of the heat-source-side heat exchanger 140. Further, the refrigerant pipe 151 includes a second refrigerant pipe 151b that connects a liquid side of the heat-source-side heat exchanger 140 and a liquid side of the utilization-side heat exchanger 110. In the second refrigerant pipe 151b, the expansion mechanism 120 is arranged. Further, the refrigerant pipe 151 includes a third refrigerant pipe 151c that connects a gas side of the utilization-side heat exchanger 110 and a suction side of the compressor 130. In the third refrigerant pipe 151c, an accumulator (not illustrated) may be arranged.

In the present embodiment, the heat exchange unit 200 is a device that cools the liquid medium with the refrigerant as described above. When the heat exchange unit 200 is a device capable of execution by switching between cooling and heating of the liquid medium with the refrigerant, the refrigerant circuit 150 is provided with a flow path switching mechanism, similarly to the refrigerant circuit 50 of the first embodiment.

### (2-1-1) Compressor

The compressor 130 suctions a low pressure refrigerant in a refrigeration cycle returning from the utilization-side heat exchanger 110, compresses the refrigerant with a compression mechanism (not illustrated), and sends a high-pressure refrigerant in the refrigeration cycle after compression, to the heat-source-side heat exchanger 140.

The compressor 130 is, for example, a scroll-type compressor. However, a type of the compressor 130 is not limited to the scroll type, and the compressor may be, for example, a screw type, a rotary type, or the like. The compressor 130 is, for example, a compressor having a variable capacity, but may be, for example, a compressor having a constant capacity.

### (2-1-2) Heat-source-side heat exchanger

The heat-source-side heat exchanger 140 is a heat exchanger that exchanges heat between a heat-source-side liquid medium flowing in the heat-source-side heat exchanger 140 and a refrigerant flowing in the heat-source-side heat exchanger 140. Although a type is not limited, the heat-source-side heat exchanger 340 is, for example, a double-tube heat exchanger. However, a type of the heat-source-side heat exchanger 340 is not limited to the double-tube heat exchanger, and it is sufficient to appropriately select a heat exchanger of a type that can be used as a heat exchanger between the refrigerant and the heat-source-side liquid medium.

### (2-1-3) Expansion mechanism

The expansion mechanism 120 is a mechanism that expands a refrigerant flowing through the second refrigerant pipe 151b, to adjust a pressure and a flow rate of the refrigerant. In the present embodiment, the expansion mechanism 120 is an electronic expansion valve whose opening degree is adjustable. However, the expansion mechanism 120 is not limited to the electronic expansion valve. For example, the expansion mechanism 120 may be a temperature automatic expansion valve having a temperature sensing cylinder, or may be a capillary tube.

### (2-1-4) Utilization-side heat exchanger

The utilization-side heat exchanger 110 exchanges heat between the refrigerant and the liquid medium. In the present embodiment, the utilization-side heat exchanger 110 is a plate-type heat exchanger. However, a type of the utilization-side heat exchanger 110 is not limited to the plate-type heat exchanger, and it is sufficient to appropriately select a heat exchanger of a type that can be used as a heat exchanger between the refrigerant and the liquid medium.

The utilization-side heat exchanger 110 is connected with the second refrigerant pipe 151b, the third refrigerant pipe 151c, a first in-heat-exchange-unit liquid medium pipe 166, and a second in-heat-exchange-unit liquid medium pipe 168. The first in-heat-exchange-unit liquid medium pipe 166 is a pipe that connects a liquid medium inlet 162 of the heat exchange unit 200 and the utilization-side heat exchanger 110. The second in-heat-exchange-unit liquid medium pipe 168 is a pipe that connects the utilization-side heat exchanger 110 and a liquid medium outlet 164 of the heat exchange unit 200. The liquid medium inlet 162 of the heat exchange unit 200 is connected with the first connection pipe 422 that connects the utilization-side equipment 410 and the liquid medium inlet 162 of the heat exchange unit 200. The liquid medium outlet 164 of the heat exchange unit 200 is connected with a second connection pipe 424 that connects the utilization-side equipment 410 and the liquid medium outlet 164 of the heat exchange unit 200.

When the compressor 130 is operated, the refrigerant flows from the second refrigerant pipe 151b into the utilization-side heat exchanger 110, and flows through a refrigerant flow path (not illustrated) in the utilization-side heat exchanger 110 to flow out to the third refrigerant pipe 151c. Further, when the pump 160 is operated, the liquid medium having flowed out from the utilization-side equipment 410 flows through the first connection pipe 422 toward the liquid medium inlet 162 of the heat exchange unit 200. The liquid medium having flowed into the heat exchange unit 200 from the liquid medium inlet 162 passes through the first in-heat-exchange-unit liquid medium pipe 166 to flow into the utilization-side heat exchanger 110. When the liquid medium passes through a liquid medium flow path (not illustrated) of the utilization-side heat exchanger 110, the liquid medium is cooled by exchanging heat with the refrigerant flowing through the refrigerant flow path (not illustrated). The liquid medium cooled by the utilization-side heat exchanger 110 flows out to the second in-heat-exchange-unit liquid medium pipe 168, and flows toward the liquid medium outlet 164. The liquid medium having flowed out of the heat exchange unit 200 from the liquid medium outlet 164 flows through the second connection pipe 424 to flow into the utilization-side equipment 410.

### (2-1-5) Casing

The casing 190 accommodates various components and various devices of the heat exchange unit 200, including the compressor 130, the heat-source-side heat exchanger 140, the expansion mechanism 120, the utilization-side heat exchanger 110, the drain pan 80, the gas detection sensor 70, and the electric component box 192. The casing 190 also accommodates an electric component that can be an ignition source described later (in the present embodiment, an electric component 93 accommodated in the electric component box 192, an inverter board 194 accommodated in the electric component box 192, a terminal box 131 of the compressor 130, and an electronic expansion valve as an example of the expansion mechanism 120). A top surface and side surfaces of the heat exchange unit 200 are surrounded by a top panel and side plates (see FIG. 13).

In a lower part of the casing 190 (see FIG. 18), the drain pan 80 is arranged. Above the drain pan 80, the heat-source-side heat exchanger 140 is arranged (see FIG. 18). Further, above the drain pan 80, the utilization-side heat exchanger 110 is arranged (see FIG. 18). The utilization-side heat exchanger 110 is arranged above the heat-source-side heat exchanger 140 (see FIG. 18). The expansion mechanism 120 is arranged above the heat-source-side heat exchanger 140, in a back face side of the casing 190 (see FIG. 18). The electric component box 192 is arranged at an upper front face side of the casing 190 (see FIG. 18). The electric component box 192 is arranged above the heat-source-side heat exchanger 140 (see FIG. 18). The compressor 130 is arranged above the heat-source-side heat exchanger 140.

At least the back face of the casing 190 is provided with an opening 191b for maintenance (see FIG. 18). The opening 191b of the casing 190 is closed by a side plate of the casing 190 normally, that is, during operation of the heat load processing system 201. By removing the side plate of the casing 190 provided in the opening 191b of the casing 190, components and devices inside the casing 190 can be maintained or replaced.

On the back face of the casing 190, there are provided a heat-source-side liquid medium inlet and a heat-source-side liquid medium outlet (not illustrated) to which a pipe of the heat-source-side liquid medium is connected. Further, on the back face of the casing 190, there are provided the liquid medium inlet 162 connected with the first connection pipe 422 and the liquid medium outlet 164 connected with the second connection pipe 424. Although a connection method is not limited, the first connection pipe 422 and the liquid medium inlet 162 are screwed to be connected. Further, although a connection method is not limited, the liquid medium outlet 164 and the second connection pipe 424 are screwed to be connected. Moreover, positions of the heat-source-side liquid medium inlet and the heat-source-side liquid medium outlet, and the liquid medium inlet 162 and the liquid medium outlet 164 are not limited to the positions drawn in the figure, and may be changed as appropriate.

### (2-1-6) Drain pan

The drain pan 80 is arranged in a lower part of the casing 190. In particular, in the present embodiment, the drain pan 80 is arranged in a lowest part of the casing 190. The drain pan 80 is arranged below the utilization-side heat exchanger 110. Further, the drain pan 80 is arranged below the heat-source-side heat exchanger 140. The drain pan 80 receives condensation water generated on the utilization-side heat exchanger 110, a pipe through which the liquid medium flows, and the like. When the heat exchange unit 200 is installed outdoors, rainwater or the like also flows into the drain pan 80. Moreover, the drain pan 80 may have a function as a bottom plate of the casing 190.

A structure of the drain pan 80 of the heat exchange unit 200 of the second embodiment is similar to that of the drain pan 80 of the heat exchange unit 100 of the first embodiment, and thus a description thereof will be omitted here in order to avoid redundancy.

### (2-1-7) Gas detection sensor

The gas detection sensor 70 is a sensor that has a detection element 72 and detects the presence or absence of refrigerant gas at a place where the detection element 72 is arranged. The gas detection sensor 70 is a sensor similar to the gas detection sensor 70 of the first embodiment.

Similarly to the first embodiment, it is preferable that the detection element 72 of the gas detection sensor 70 is arranged in an internal space Si of the drain pan 80 located at the lower part in the casing 190. Further, similarly to the first embodiment, the detection element 72 is preferably arranged on a lower end 82ab side of an inclined part 82a of a bottom plate 82 of the drain pan 80 (in the present embodiment, a rear end side of the bottom plate 82). Further, similarly to the first embodiment, the detection element 72 is preferably arranged near a drain port 86a, which is a discharge port for water from the internal space Si of the drain pan 80. By arranging the detection element 72 at such a position where refrigerant gas is likely to accumulate, highly reliable refrigerant leakage detection is possible.

Further, for example, the position where the detection element 72 of the gas detection sensor 70 is arranged may be, for example, above an upper end part 84a of a side wall 84 of the drain pan 80 (above the internal space Si of the drain pan 80, in the casing 90), as shown by reference numeral 72b in FIG. 18.

Further, similarly to the first embodiment, the detection element 72 of the gas detection sensor 70 is arranged below the electric component that can be an ignition source, regardless of whether or not being placed in the internal space Si of the drain pan 80.

Note that the electric component that can be an ignition source include an electric component that may generate an electric spark. In the present embodiment, the electric components that can be an ignition source include: the electric component 93 such as an electromagnetic switch, a contactor, and a relay, and the inverter board 194 for the compressor 130, which are accommodated in the electric component box 192; an electronic expansion valve as an example of the expansion mechanism 120; and the terminal box 131 of the compressor 130. An electric wire (not illustrated) for supply of electric power to a motor 130a of the compressor 130 is connected to the terminal box 131 of the compressor 130.

Further, although it is not mounted on the heat exchange unit 200 in the present embodiment, a heater may be arranged in the heat exchange unit 200 when the heat exchange unit 200 is installed in a cold region. Depending on specifications, the heater can be hot enough to be an ignition source. It is preferable that the electric component that can become hot enough to be an ignition source is also arranged above the detection element 72 of the gas detection sensor 70.

Moreover, preferably, the detection element 72 of the gas detection sensor 70 is arranged at a position lower than a height position of 300 mm above a bottom of the casing 190. Such an arrangement allows refrigerant leakage to be easily detected before the refrigerant gas reaches a height position of the electric component that can be an ignition source from the bottom side of the casing 190, even if the refrigerant leaks in the heat exchange unit 200. Further, by arranging the detection element 72 of the gas detection sensor 70 at the position lower than the height position of 300 mm above the bottom of the casing 190, it is possible to avoid increasing a size of the heat exchange unit 200 (the casing 190) while reducing a possibility of ignition when the refrigerant leaks.

Further, preferably, the electric component that can be an ignition source (in the present embodiment: the electric components 93 such as an electromagnetic switch, a contactor, and a relay, and the inverter board 194 for the compressor 130, which are accommodated in the electric component box 192; an electronic expansion valve as an example of the expansion mechanism 120; and the terminal box 131 of the compressor 130) is arranged at a height position of 300 mm or more from the bottom of the casing 190 (see FIGS. 16 and 17). By arranging the electric component that can be an ignition source at such a height position, the possibility of ignition with the electric component in the casing 190 as the ignition source is reduced even if the refrigerant leaks.

Further, from the viewpoint of maintenance, the detection element 72 of the gas detection sensor 70 is preferably arranged in a space near the opening 191b for maintenance, in the casing 190. The space near the opening 191b is a space accessible to a worker from the opening 191b. For example, it is preferable that the space near the opening 191b is a space within hand reach from the opening 191b (for example, a space within 50 cm from the opening 191b). An arrangement of the detection element 72 of the gas detection sensor 70 at such a position allows the detection element 72 to be easily replaced and inspected by removing the side plate of the casing 190 that closes the opening 191b.

Further, since the detection element 72 of the gas detection sensor 70 detects the refrigerant gas, it is preferable to have a structure in which the detection element 72 is less likely to be immersed even if condensation water accumulates in the internal space Si of the drain pan 80. For example, similarly to the first embodiment, the heat exchange unit 200 preferably has a float 88 arranged in the internal space Si of the drain pan 80, and the detection element 72 of the gas detection sensor 70 is preferably attached to an upper surface 88a of the float 88 or a side surface 88b of the float 88. Here, in order to avoid redundancy of description, the description of the float 88 will be omitted.

Further, the detection element 72 of the gas detection sensor 70 may be directly attached to the side wall 84 of the drain pan 80 or a frame (not illustrated) of the casing 90. In this case, the detection element 72 of the gas detection sensor 70 is preferably arranged at a position that is less likely to be immersed, for example, a position higher than the drain port 86a in the internal space Si of the drain pan 80, as shown by reference numeral 72a in FIG. 18.

Meanwhile, for a position of the detection element 72 of the gas detection sensor 70, a position of the electric component that can be an ignition source, and a positional relationship between the detection element 72 of the gas detection sensor 70 and the electric component that can be an ignition source, the matters described in (2-4-6) of the first embodiment may be applied, as long as there is no contradiction and as long as within the scope of the claims.

### (2-1-8) Electric component box

The electric component box 192 is a case that accommodates various electric components. The electric component box 192 accommodates a heat-exchange-unit side control board 195 and a power source terminal block (not illustrated). Further, the electric component box 192 accommodates the inverter board 194 for the compressor 130. Further, the electric component box 92 accommodates the electric component 93 such as an electromagnetic switch, a contactor, and a relay. The electric component 93 need not include all of the electromagnetic switch, the contactor, and the relay, but may include any of the electromagnetic switch, the contactor, and the relay. Note that the electric components accommodated in the electric component box 192 are not limited to those exemplified, and various electric components are accommodated as needed.

The heat-exchange-unit side control board 195 has various electric circuits, a microcomputer including a CPU and a memory that stores a program executed by the CPU, and the like.

The heat-exchange-unit side control board 195 controls an operation of each part of the heat exchange unit 200.

The heat-exchange-unit side control board 195 is electrically connected to various devices of the heat exchange unit 200. The various devices of the heat exchange unit 200 connected to the heat-exchange-unit side control board 195 include the compressor 130 and the expansion mechanism 120. Further, it is preferable that the heat-exchange-unit side control board 195 can transmit a control signal to the pump 160, the heat-source-side pump 520, and the like. Further, the heat-exchange-unit side control board 195 is communicably connected to various sensors provided to the heat exchange unit 200, and receives measured values from the various sensors (not illustrated). The various sensors provided to the heat exchange unit 200 include, but not limited to, for example, a temperature sensor that is provided in the first refrigerant pipe 151a and the third refrigerant pipe 151c and measures a temperature of a refrigerant, a pressure sensor that is provided in the first refrigerant pipe 151a and measures a pressure of the refrigerant, a temperature sensor that is provided in the first in-heat-exchange-unit liquid medium pipe 166 and the second in-heat-exchange-unit liquid medium pipe 168 and measures the temperature of the liquid medium, and the like. Further, the heat-exchange-unit side control board 195 is communicably connected to the gas detection sensor 70 of the heat exchange unit 200.

The heat-exchange-unit side control board 195 controls an operation of various devices of the heat exchange unit 200 and an operation of the pump 160 and the heat-source-side pump 520, in response to an operation or stop command given from an operation device (not illustrated). Further, the heat-exchange-unit side control board 195 controls an operation of various devices of the heat exchange unit 200 such that the liquid refrigerant is cooled to reach a predetermined target temperature and flows out from the liquid medium outlet 164 of the heat exchange unit 200. Note that an operating principle of a vapor compression refrigerator is generally well known, and thus a description thereof is omitted here. Further, when the gas detection sensor 70 detects leakage of refrigerant gas, the heat-exchange-unit side control board 195 controls devices such that the various devices of the heat exchange unit 200, the pump 160, and the heat-source-side pump 520 perform a predetermined operation at a time of leakage.

### (3) Characteristics

(3-1)
The heat exchange unit 200 of the above-described embodiment exchanges heat between the liquid medium sent to the utilization-side equipment 410 and the refrigerant, to perform at least one of cooling and heating of the liquid medium. The heat exchange unit 200 includes the utilization-side heat exchanger 110, the electric component that can be an ignition source, the casing 190, and the gas detection sensor 70. The utilization-side heat exchanger 110 exchanges heat between the refrigerant that is flammable and the liquid medium. The casing 190 accommodates the utilization-side heat exchanger 110 and the electric component that can be an ignition source. The gas detection sensor 70 has the detection element 72 arranged below the electric component that can be an ignition source, and detects the presence or absence of refrigerant gas at a place where the detection element 72 is arranged.

Moreover, in the present embodiment, the electric component that can be an ignition source includes, for example, the electric component 93. The electric component 93 includes at least one of an electromagnetic switch, a contactor, or a relay. In the present embodiment, the electric component 93 is accommodated in the electric component box 92. Further, in the present embodiment, the electric component that can be an ignition source includes the terminal box 131 of the compressor 130. An electric wire (not illustrated) for supply of electric power to the motor 130a of the compressor 130 is connected to the terminal box 131 of the compressor 130. Further, in the present embodiment, the electric component that can be an ignition source includes an electronic expansion valve as an example of the expansion mechanism 120. Further, in the present embodiment, the electric component that can be an ignition source includes the inverter board 194 for the compressor 130, accommodated in the electric component box 192.

Note that the heat exchange unit 200 need not have all of the exemplified electric components that can be an ignition source, and may have some of them. Further, in addition to the exemplified electric components that can be an ignition source or in place of the exemplified electric components that can be an ignition source, the heat exchange unit 200 may have an electric component that can be an ignition source other than those exemplified.

The refrigerant gas is heavier than air as described above. Therefore, when the refrigerant leaks, the leaked refrigerant gas tends to stagnate on the lower side. In this heat exchange unit 200, since the detection element 72 of the gas detection sensor 70 is arranged below the electric component that can be an ignition source, it is easy to detect refrigerant leakage before ignition with the electric equipment inside the casing 190, even if the refrigerant leaks.

(3-2)
In the heat exchange unit 200 of the above-described embodiment, the detection element 72 of the gas detection sensor 70 is arranged at a position lower than a height position of 300 mm above the bottom of the casing 190.

Since the detection element 72 of the gas detection sensor 70 is arranged at the position lower than the height position of 300 mm above the bottom of the casing 190 where the refrigerant gas heavier than air tends to accumulate, it is easy to detect refrigerant leakage relatively early even if the refrigerant leaks, and the possibility of ignition is likely to be reduced.

Further, by setting a reference value to a relatively small value of 300 mm, it is possible to avoid increasing a size of the heat exchange unit 200 (the casing 190) while reducing a possibility of ignition when the refrigerant leaks.

### (4) Modified examples

### (4-1) Modified Example 2A

The heat exchange unit 200 of the above-described embodiment does not have a pump 160 or a heat-source-side pump 520, but the configuration is not limited thereto. The heat exchange unit 200 may have the pump 160 and/or the heat-source-side pump 520 arranged inside the casing 190.

### (4-2) Modified Example 2B

Similarly to Modified example 1B of the first embodiment, the heat exchange unit 200 further has a gas detection sensor having a detection element arranged outside the casing 90, in addition to the gas detection sensor 70 having the detection element 72 arranged in the casing 90, or in place of the gas detection sensor 70 having the detection element 72 arranged in the casing 90. In order to avoid redundancy of the description with Modified example 1B, the description of the details will be omitted.

### (4-3) Modified Example 2C

In the above-described embodiment, a liquid medium cooled or heated by the heat exchange unit 200 circulates in the liquid medium circuit 400, but the configuretion is not limited to this. For example, when the cooled or heated liquid medium itself is used directly, the liquid medium sent to the utilization-side equipment 410 (for example, a tank) may be used as it is without circulating in the liquid medium circuit 400.

Further, similarly, the heat-source-side liquid medium that exchanges heat with the refrigerant circulates in the heat-source-side liquid medium circuit 500, but the configuration is not limited to this. For example, the heat-source-side liquid medium may be groundwater or warm wastewater. Then, the heat load processing system 201 may not include the heat source equipment 510, and the heat-source-side liquid medium that has exchanged heat with the refrigerant in the heat-source-side heat exchanger 140 may be drained as it is.

### INDUSTRIAL APPLICABILITY

It is widely applicable and useful for heat exchange units that use flammable refrigerants.

### REFERENCE SIGNS LIST

10, 110: utilization-side heat exchanger (heat exchanger)
20: first expansion mechanism (electric component)
60: pump
60a: motor
61: terminal box (electric component)
61a: electric wire
70, 270: gas detection sensor
72, 272: detection element
90, 190: casing
93: electric component
100, 200: heat exchange unit
120: expansion mechanism (electric component)
131: terminal box (electric component)
194: inverter board (electric component)
410: utilization-side equipment
FL: floor surface
R: machine room (unit installation space)

## Claims

1. A heat exchange unit (100, 200) configured to exchange heat between a liquid medium sent to utilization-side equipment (410) and a refrigerant that is flammable, to perform at least one of cooling and heating of the liquid medium, the heat exchange unit comprising:
a heat exchanger (10, 110) configured to exchange heat between the refrigerant and the liquid medium;
an electric component (20, 61, 93, 120, 131, 194) that can be an ignition source;
a casing (90, 190) accommodating the heat exchanger and the electric component; and
a gas detection sensor (70, 270) having a detection element (72, 272) arranged below the electric component, the gas detection sensor being configured to detect presence or absence of gas of the refrigerant at a place where the detection element is arranged,
**characterized in that** the detection element (72) of the gas detection sensor (70) is arranged below a liquid-side connecting port (100a) and a gas-side connecting port (100b) of the heat exchange unit (100).

2. The heat exchange unit according to claim 1, wherein
the detection element is arranged at a position lower than a height position of 300 mm above a bottom of the casing.

3. The heat exchange unit according to claim 1, wherein
the casing is for being installed in a unit installation space (R), and
the detection element is for being arranged at a height position within 300 mm from a floor surface (FL) on which the heat exchange unit is to be installed in the unit installation space.

4. The heat exchange unit according to any one of claims 1 to 3, further comprising
a pump (60) including a motor (60a) and a terminal box (61) connected with an electric wire (61a) for supply of electric power to the motor, the pump being arranged inside the casing and being configured to send the liquid medium to the utilization-side equipment, wherein
the electric component includes the terminal box.

5. The heat exchange unit according to any one of claims 1 to 4, wherein
the electric component includes at least one of an electromagnetic switch, a contactor, and a relay.

## Patentansprüche

1. Wärmetauschereinheit (100, 200), die so konfiguriert ist, dass sie Wärme zwischen einem flüssigen Medium, das an eine nutzungsseitige Einrichtung (410) gesendet wird, und einem Kältemittel, das entflammbar ist, austauscht, um zumindest entweder eine Kühlung oder eine Erwärmung des flüssigen Mediums durchzuführen, wobei die Wärmetauschereinheit umfasst:
einen Wärmetauscher (10, 110), der so konfiguriert ist, dass er Wärme zwischen dem Kältemittel und dem flüssigen Medium austauscht;
eine elektrische Komponente (20, 61, 93, 120, 131, 194), die eine Zündquelle sein kann;
ein Gehäuse (90, 190), das den Wärmetauscher und die elektrische Komponente aufnimmt; und
einen Gasdetektionssensor (70, 270) mit einem Detektionselement (72, 272), das unterhalb der elektrischen Komponente angeordnet ist, wobei der Gasdetektionssensor so konfiguriert ist, dass er das Vorhandensein oder die Abwesenheit von Gas des Kältemittels an einer Stelle detektiert, wo das Detektionselement angeordnet ist,
**dadurch gekennzeichnet, dass** das Detektionselement (72) des Gasdetektionssensors (70) unterhalb einer flüssigkeitsseitigen Anschlussöffnung (100a) und einer gasseitigen Anschlussöffnung (100b) der Wärmetauschereinheit (100) angeordnet ist.

2. Wärmetauschereinheit nach Anspruch 1, wobei
das Detektionselement an einer Position angeordnet ist, die niedriger als eine Höhenposition von 300 mm oberhalb eines Bodens des Gehäuses ist.

3. Wärmetauschereinheit nach Anspruch 1, wobei
das Gehäuse dazu bestimmt ist, in einem Einheitsinstallationsraum (R) installiert zu werden, und
das Detektionselement dazu bestimmt ist, in einer Höhenposition innerhalb von 300 mm von einer Bodenfläche (FL) angeordnet zu werden, auf der die Wärmetauschereinheit in dem Einheitsinstallationsraum installiert werden soll.

4. Wärmetauschereinheit nach einem der Ansprüche 1 bis 3, weiter umfassend
eine Pumpe (60) einschließlich eines Motors (60a) und einer Anschlussbox (61), die mit einer elektrischen Leitung (61a) zur Versorgung des Motors mit elektrischer Energie verbunden ist, wobei die Pumpe im Inneren des Gehäuses angeordnet und so konfiguriert ist, dass sie das flüssige Medium zu der nutzungsseitigen Einrichtung sendet, wobei
die elektrische Komponente die Anschlussbox einschließt.

5. Wärmetauschereinheit nach einem der Ansprüche 1 bis 4, wobei
die elektrische Komponente zumindest eines von einem elektromagnetischen Schalter, einem Schütz und einem Relais einschließt.

## Revendications

1. Unité (100, 200) d'échange de chaleur configurée pour échanger de la chaleur entre un milieu liquide envoyé à un équipement (410) côté utilisation et un réfrigérant qui est inflammable, pour mettre en oeuvre au moins l'un parmi un refroidissement et un chauffage du milieu liquide, l'unité d'échange de chaleur comprenant :
un échangeur de chaleur (10, 110) configuré pour échanger de la chaleur entre le réfrigérant et le milieu liquide ;
un composant électrique (20, 61, 93, 120, 131, 194) qui peut être une source d'inflammation ;
un boîtier (90, 190) logeant l'échangeur de chaleur et le composant électrique ; et
un capteur (70, 270) de détection de gaz présentant un élément (72, 272) de détection agencé au-dessous du composant électrique, le capteur de détection de gaz étant configuré pour détecter la présence ou l'absence d'un gaz du réfrigérant à un endroit où l'élément de détection est agencé,
**caractérisée en ce que** l'élément (72) de détection du capteur (70) de détection de gaz est agencé au-dessous d'un orifice (100a) de raccordement côté liquide et d'un orifice (100b) de raccordement côté gaz de l'unité (100) d'échange de chaleur.

2. Unité d'échange de chaleur selon la revendication 1, dans laquelle
l'élément de détection est agencé à une position inférieure à une position de hauteur de 300 mm au-dessus d'un fond du boîtier.

3. Unité d'échange de chaleur selon la revendication 1, dans laquelle
le boîtier est destiné à être installé dans un espace (R) d'installation d'unité, et
l'élément de détection est destiné à être agencé à une position de hauteur dans les 300 mm à partir d'une surface (FL) de sol sur laquelle l'unité d'échange de chaleur doit être installée dans l'espace d'installation d'unité.

4. Unité d'échange de chaleur selon l'une quelconque des revendications 1 à 3, comprenant en outre
une pompe (60) incluant un moteur (60a) et une boîte (61) à bornes connectée à un fil électrique (61a) pour fournir de l'énergie électrique au moteur, la pompe étant agencée à l'intérieur du boîtier et étant configurée pour envoyer le milieu liquide vers l'équipement côté utilisation, dans laquelle
le composant électrique inclut la boîte à bornes.

5. Unité d'échange de chaleur selon l'une quelconque des revendications 1 à 4, dans laquelle
le composant électrique inclut au moins l'un parmi un commutateur électromagnétique, un contacteur et un relais.
